# EUROPEAN PATENT APPLICATION

(11) **EP 3 363 936 A1**
(43) Date of publication of application: **22.08.2018**
(21) Application number: 16855557.1
(22) Date of filing: 14.10.2016
(51) Int. Cl.: D01F 8/06, B60C 9/00, C08K 7/02, C08L 21/00, B60C 15/06

(54) **RUBBER-REINFORCING FIBER, RUBBER-FIBER COMPOSITE, AND PNEUMATIC TIRE USING SAME**

(30) Priority: 14.10.2015 JP 2015203300
(71) Applicant: Bridgestone Corporation, Tokyo 104-8340 (JP)
(72) Inventor: NAKAMURA, Masaaki, Tokyo 104-8340 (JP)
(74) Representative: Oxley, Robin John George
(86) International application number: PCT/JP2016/080626
(87) International publication number: WO 2017/065305

(57) **Abstract**

Provided are: a rubber-reinforcing fiber, in which adhesion between a rubber and a fiber is enhanced and which is thereby capable of further improving the durability than before when used as a reinforcing material; a rubber-fiber composite; and a pneumatic tire using the same. The rubber-reinforcing fiber includes a core-sheath type composite fiber whose core portion is composed of a high-melting-point resin (A) having a melting point of 150°C or higher and sheath portion is composed of a resin material (B) having a melting point lower than that of the high-melting point resin (A). The resin material (B) contains an olefin-based polymer (X) and a vulcanization accelerator (F).

## Description

### TECHNICAL FIELD

The present invention relates to a rubber-reinforcing fiber, a rubber-fiber composite, and a pneumatic tire using the same (hereinafter, also simply referred to as "tire"). More particularly, the present invention relates to: a rubber-reinforcing fiber useful for reinforcement of rubber articles such as tires and a rubber-fiber composite, ; and a pneumatic tire using the same.

### BACKGROUND ART

Conventionally, as reinforcing materials of rubber articles, a variety of materials such as organic fibers and metal materials have been examined and used. Particularly, as reinforcing materials used for reinforcement of rubber articles such as pneumatic tires that are subjected to strain input, cord materials whose adhesion with a rubber is improved by coating with an adhesive composition have been used conventionally.

Further, as one type of organic fiber, the use of a so-called "core-sheath fiber", whose cross-sectional structure is constituted by a core portion forming the center and a sheath portion covering the periphery of the core portion, as a reinforcing material has also been examined in various studies. For example, Patent Document 1 discloses a cord-rubber composite obtained by embedding a cord in an unvulcanized rubber and integrating them by vulcanization, which cord is composed of a core-sheath type fiber that contains a resin selected from at least one of polyesters, polyamides, polyvinyl alcohols, polyacrylonitriles, rayons and heterocycle-containing polymers as a core component, and a thermoplastic resin that is thermally fusible with a rubber as a sheath component. Moreover, Patent Document 2 discloses a core-sheath type composite fiber comprising a core portion and a sheath portion, which core portion contains a thermoplastic resin and sheath portion contains a polyolefin resin.

### RELATED ART DOCUMENTS

### PATENT DOCUMENTS

[Patent Document 1] Japanese Unexamined Patent Application Publication No. H10-6406 (Claims, etc.)
[Patent Document 2] Japanese Unexamined Patent Application Publication No. 2003-193332 (Claims, etc.)

### SUMMARY OF THE INVENTION

### PROBLEMS TO BE SOLVED BY THE INVENTION

However, when a cord material treated with an adhesive is cut to be embedded into a rubber, the cut end surface of the cord material is not covered with an adhesive composition; therefore, there is a room for further improvement in terms of adhesiveness under an excessive strain applied thereto as a load after adhesion with the rubber. A similar improvement is also desired in a reinforcing material in which such a core-sheath fiber as disclosed in Patent Document 1 is used.

Further, in Example 1 of Patent Document 2, an olefin-based polymer composition obtained by mixing two kinds polymers, which are a high-density polyethylene and a maleic acid-modified high-density polyethylene having an acid value of 27 mg KOH/g as determined by the method of JIS K0070, is applied as a resin of the sheath portion so as to obtain an effect of improving the compatibility of the sheath portion at the interface with nylon 6 resin used in the core portion. In this case, however, since a resin having a quite high acid value is incorporated into the resin material of the sheath portion, the compatibility is reduced due to the difference in polarity between the sheath portion and a rubber to be adhered. At the same time, incorporation of the polymer having a high acid value causes the resin material of the sheath portion to generate a proton H⁺-donating reducing atmosphere, and an action of reducing a polyvulcanized product derived from sulfur contained in a rubber composition into hydrogen sulfide and the like is thereby exerted; therefore, it is believed that the effect of improving the cohesive failure resistance with an adherend rubber, which effect is attributed to sulfur cross-linking by a polyvulcanized product in a rubber, is also deteriorated in the vicinity of the interface with the rubber. In tires and the like of recent years that are gradually reduced in weight from the energy conservation standpoint, since the stability against mechanical inputs is increasingly required, a further improvement from the resin of the sheath portion of Patent Document 2 is demanded in terms of the adhesiveness and the durability of the adhesive strength under traveling.

In view of the above, an object of the present invention is to provide: a rubber-reinforcing fiber, in which adhesion between a rubber and a fiber is enhanced and which is thereby capable of further improving the durability than before when used as a reinforcing material; a rubber-fiber composite; and a pneumatic tire using the same.

### MEANS FOR SOLVING THE PROBLEMS

The present inventor intensively studied to discover that the above-described problems can be solved by using a core-sheath type composite fiber whose core portion is constituted by a high-melting-point resin having a melting point of 150°C or higher and sheath portion is constituted by a low-melting-point resin material that contains an olefin-based copolymer as a main component and a vulcanization accelerator, thereby completing the present invention.

That is, the rubber-reinforcing fiber of the present invention is characterized by comprising a core-sheath type composite fiber whose core portion is composed of a high-melting-point resin (A) having a melting point of 150°C or higher and sheath portion is composed of a resin material (B) having a melting point lower than that of the high-melting point resin (A),
wherein the resin material (B) comprises an olefin-based polymer (X) and a vulcanization accelerator (F).

In the present invention, it is preferred that the resin material (B) further comprise at least one selected from the group consisting of a compatibilizing agent (E) and a filler (N). It is also preferred that the olefin-based polymer (X) be an olefin-based polymer (Y) which contains a Lewis base functional group-containing addition-polymerizable monomer in an amount of 5% by mole or less, and that the Lewis base functional group of the olefin-based polymer (Y) be a pyridyl group, an *N*-substituted imidazolyl group, an *N*-substituted indazolyl group, a nitrile group, an azide group, an *N*-substituted imino group, an *N,N*-substituted amino group, an *N,N*-substituted aminooxy group, an *N,N,N*-substituted hydrazino group, a nitroso group, a nitro group, a nitrooxy group, a furyl group, a carbonyl group, a thiocarbonyl group, an alkoxy group, an alkyloxycarbonyl group, an *N,N*-substituted carbamoyl group, a thioalkoxy group, a substituted sulfinyl group, a substituted sulfonyl group, or a substituted sulfonic acid group.

Further, in the present invention, it is preferred that the olefin-based polymer (X) be composed of an olefin-based random copolymer (C) and/or an olefin-based homopolymer or olefin-based copolymer (D) (excluding (C)), and it is also preferred that the olefin-based polymer (X) comprise a conjugated diene-containing olefin-based random copolymer (C2).

Still further, in the present invention, it is preferred that the vulcanization accelerator (F) be a Lewis base compound (F1) having an electron pair-donating Lewis base moiety, or a compound (F2) capable of generating a thiyl radical. The Lewis base compound (F1) is, among vulcanization accelerators, a compound that is capable of facilitating a reaction with sulfur, such as opening of a sulfur ring, through donation of an electron pair from a Lewis base. The compound (F2) capable of generating a thiyl radical is a compound that is capable of generating a thiyl radical, which can activate sulfur during vulcanization in rubber processing, and thereby facilitating vulcanization, and the compound (F2) is preferably a thiourea-based, thiazole-based, sulfenamide-based, thiuram-based, dithiocarbamate-based or xanthate-based vulcanization accelerator.

Yet still further, in the present invention, it is preferred that the compatibilizing agent (E) be a styrene-based elastomer containing a monomolecular chain in which mainly styrene monomers are arranged in series, and it is also preferred that the filler (N) be a carbon black. Yet still further, in the present invention, it is preferred that the resin material (B) comprise the vulcanization accelerator (F) in an amount of 0.05 to 20 parts by mass with respect to 100 parts by mass of the olefin-based polymer (X), and it is also preferred that the resin material (B) comprises the compatibilizing agent (E) and/or the filler (N) in an amount of 0.1 to 30 parts by mass with respect to 100 parts by mass of the olefin-based polymer (X). Moreover, in the present invention, it is preferred that the conjugated diene-containing olefin-based random copolymer (C2) be contained in an amount of 5 to 95 parts by mass in 100 parts by mass of the olefin-based polymer (X).

The rubber-fiber composite of the present invention is characterized in that it is obtained by coating a reinforcing material composed of the above-described rubber-reinforcing fiber with a rubber.

The tire of the present invention is characterized by comprising a reinforcing layer composed of the above-described rubber-fiber composite.

### EFFECTS OF THE INVENTION

According to the present invention, a rubber-reinforcing fiber which exhibits an improved adhesion with a rubber can be obtained and, by using this rubber-reinforcing fiber, a rubber-fiber composite capable of further improving the durability as compared to conventional rubber-fiber composites when used as a reinforcing material, and a pneumatic tire using the same can be realized.

### BRIEF DESCRIPTION OF THE DRAWINGS

FIG. 1 is a widthwise cross-sectional view that illustrates one example of the pneumatic tire of the present invention.
FIG. 2 is an explanatory drawing that illustrates the cut-out state of a sample piece used in Examples.

### MODE FOR CARRYING OUT THE INVENTION

Embodiments of the present invention will now be described in detail referring to the drawings.

The rubber-reinforcing fiber of the present invention comprises a core-sheath type composite fiber whose core portion is composed of a high-melting-point resin (A) having a melting point of 150°C or higher and sheath portion is composed of a resin material (B) having a melting point lower than that of the high-melting-point resin (A).

The rubber-reinforcing fiber of the present invention is characterized in that the resin material (B) constituting the sheath portion comprises an olefin-based polymer (X) and a vulcanization accelerator (F). By using a combination of the olefin-based polymer (X) and the vulcanization accelerator (F) in the sheath portion, a rubber-reinforcing fiber which has superior adhesiveness with a rubber than conventional rubber-reinforcing fibers can be obtained.

In the core-sheath type composite fiber constituting the rubber-reinforcing fiber of the present invention, since the resin material (B) constituting the sheath portion has a melting point lower than that of the high-melting-point resin (A) constituting the core portion, there is an advantage that the core-sheath type composite fiber, when applied for reinforcement of a rubber article, can be directly adhered with a rubber through thermal fusion by the heat applied during vulcanization. In the present invention, a phenomenon that a fiber resin which is melted by heating at a temperature of its melting point or higher is tightly adhered with a rubber through interaction at their interface is referred to as "fusion".

That is, the rubber-reinforcing fiber of the present invention is coated with a rubber to form a rubber-fiber composite and, since integration of this rubber-fiber composite with a rubber does not require a dipping treatment in which an adhesive composition (e.g., a resorcin-formalin-latex (RFL) adhesive) conventionally used for bonding tire cords is applied, the bonding step can be simplified. Further, in the application for reinforcement of a tire or the like, for adhesion of an organic fiber with a rubber using an adhesive composition, it is generally required to coat the organic fiber with a fiber coating rubber (skim rubber) in order to secure an adhesive strength; however, according to the rubber-reinforcing fiber of the present invention, a high adhesive strength between the rubber-reinforcing fiber and a side rubber, a tread rubber or the like can be directly attained through thermal fusion without requiring a fiber coating rubber. In cases where an organic fiber is coated with a fiber coating rubber, since it is necessary to secure such a coating thickness that prevents breakage of the rubber coating, the rubber weight is increased as much as the amount of the rubber used for securing the coating thickness, which in turn contradicts the demand for reduction in tire weight that generally contributes to improvement of the economic efficiency. However, in the present invention, there is no such restriction in the adhesion process; therefore, a composite with a rubber species appropriate for a part to be reinforced, such as a side tread rubber, can be provided without any secondary negative effect such as an increase in the weight of fiber coating rubber.

In this manner, the above-described core-sheath type composite fiber is capable of exhibiting sufficient reinforcement performance when used as a reinforcing material of a rubber article such as a tire. Accordingly, since the rubber-reinforcing fiber of the present invention can be fused with a rubber via the sheath portion in the absence of a dipping treatment or a rubber coating process while securing reinforcement performance by the core portion, the use of the rubber-fiber composite of the present invention particularly in the tire reinforcement application can also contribute to a reduction in tire weight through a reduction in gauge thickness.

Further, according to the studies conducted by the present inventor, it was found that, when the rubber-fiber composite of the present invention is vulcanized, at a cut end of the resultant, the cut end surface of the core portion that was exposed prior to the vulcanization is covered by the resin of the sheath portion, and the resin of the sheath portion and a rubber can be strongly fused together in this part as well. The reason for this is believed to be because the low-melting-point olefin-based polymer constituting the sheath portion is made to flow by the heat applied during the vulcanization and infiltrates into gaps between the cut end surface of the core portion constituted by a high-melting-point resin and the rubber. Consequently, the durability of the rubber-fiber composite against strain can be further improved after the vulcanization.

In those organic fibers for rubber article reinforcement which are coated with an adhesive composition such as a resorcin-formalin-latex (RFL) adhesive that is conventionally used for bonding tire cords, since cords are cut in accordance with the dimensions of a member in the process of assembling the member composed of a rubber or a coated cord material, the surface of the end at which the cords are cut is not treated with the adhesive composition. In such a rubber article, input of a high strain that causes detachment of the cord end and the rubber may cause development of a crack from the non-adhered part between the cord end and the rubber, and this could result in breakage of the rubber article. Therefore, in the structural design of commercial rubber articles such as tires, there are restrictions relating to inhibition of crack generation from a cord end in that, for example, no cord end should be arranged in a tire part subjected to high strain, or strain causing detachment of a cord end and a rubber should be reduced by increasing the thickness of the rubber member or the like. On the other hand, in the present invention, since such a cut end surface of a cord fuses with a rubber, there is no restriction associated with crack development from a non-adhered part between the cord end and the rubber due to strain; therefore, it is now possible to provide a composite with a rubber species that allows a design of arranging a cord end in a tire part subjected to high strain, which was previously difficult, and enables to achieve a reduction in tire weight through a reduction in gauge thickness in the vicinity of the cord end as it is no longer necessary to worry about an increase in strain that may cause detachment of the cord end and the rubber.

The rubber-reinforcing fiber of the present invention is characterized by being a composite fiber having a core-sheath structure in which the sheath portion is constituted by a low-melting-point resin material (B) and can be directly adhered with a rubber through thermal fusion and, at the same time, the core portion is constituted by a high-melting-point resin (A) having a melting point of 150°C or higher. When the composite fiber is, for example, a single-component monofilament cord, the effects of the present invention cannot be attained. In the case of a conventional single-component monofilament cord that is made of a polyolefin resin or the like and has a low melting point, the monofilament cord forms a melt through thermal fusion with the rubber of a rubber article and can thereby be wet-spread and adhered to the adherend rubber; however, once the monofilament cord is melted and the molecular chains of the fiber resin that are oriented in the cord direction become unoriented, the tensile rigidity that is required as a cord material for rubber reinforcement can no longer be maintained. Meanwhile, when the monofilament cord has such a high melting point that does not cause its resin to form a melt even under heating, the melt-fusibility with a rubber is deteriorated. Therefore, in a single-component monofilament cord that is not a composite fiber having the core-sheath structure of the present invention, it is difficult to achieve both conflicting functions of maintaining the tensile rigidity and maintaining the melt-fusibility with a rubber.

In the rubber-reinforcing fiber of the present invention, the melting point of the high-melting-point resin (A) constituting the core portion is 150°C or higher, preferably 160°C or higher. When the melting point of the high-melting-point resin is lower than 150°C, for example, the core portion of the composite fiber is melt-deformed and reduced in thickness and/or the orientation of the fiber resin molecules is deteriorated during vulcanization of a rubber article, so that sufficient reinforcement performance is not attained.

Further, in the rubber-reinforcing fiber of the present invention, the lower limit of the melting point of the resin material (B) constituting the sheath portion is in a range of preferably 80°C or higher, more preferably 120°C or higher, still more preferably 135°C or higher. When the melting point of the resin material (B) is lower than 80°C, a sufficient adhesive strength may not be obtained due to, for example, formation of fine voids on the surface that is caused by inadequate adhesion of the rubber to the surface of the olefin-based polymer through fluidization in the early stage of vulcanization. The melting point of the resin material (B) is preferably 120°C or higher since this enables to simultaneously perform thermal fusion of the rubber and the resin material (B) and a vulcanization cross-linking reaction of the resulting rubber composition at a vulcanization temperature of 130°C or higher that can be used industrially for rubber compositions in which sulfur and a vulcanization accelerator are incorporated. In cases where the vulcanization temperature is set at 170°C or higher in order to industrially shorten the vulcanization time, with the melting point of the resin material (B) being lower than 80°C, since the viscosity of the molten resin is excessively low and the thermal fluidity is thus high during vulcanization, a pressure applied during vulcanization may cause generation of a thin part in the sheath, and a strain stress applied in an adhesion test or the like may be concentrated in such a thin part of the resin material of the sheath portion to make this part more likely to be broken; therefore, the melting point of the resin material (B) is more preferably 120°C or higher. Meanwhile, when the upper limit of the melting point of the resin material (B) is lower than 150°C, because of the thermal fluidity of the resin material (B), compatibility with a rubber composition in the early stage of vulcanization may be attained at a high vulcanization temperature of 175°C or higher. Further, when the melting point of the resin material (B) is 145°C or lower, resin compatibility in the early stage of vulcanization can be attained at a common vulcanization temperature, which is preferred. Moreover, when the resin material (B) contains an elastomer having rubber-like physical properties, the resin material (B) is softened with no clear melting point; however, it is preferred since the rubber-like physical properties correspond to a molten state of a polymer and compatibility of the resin material (B) can thus be attained in the early stage of vulcanization. In the present invention, a rubber or elastomer that has no clear melting point is regarded to have a melting point that is substantially lower than that of the high-melting-point resin of the core portion, unless the rubber or elastomer contains a material whose melting point or softening point is 150°C or higher.

In the rubber-reinforcing fiber of the present invention, the high-melting-point resin having a melting point of 150°C or higher that constitutes the core portion is not particularly restricted as long as it is a known resin that is capable of forming a filament when melt spun. Specific examples thereof include polyester resins, such as polypropylene (PP), polyethylene terephthalate (PET), polybutylene terephthalate (PBT), polyethylene naphthalate (PEN) and polytrimethylene terephthalate (PTT); and polyamide resins, such as nylon 6, nylon 66 and nylon 12, and the high-melting-point resin is preferably a polyester resin, a polyolefin resin, or the like. The polyester resin is particularly preferably, for example, a polytrimethylene terephthalate (PTT) resin.

In the rubber-reinforcing fiber of the present invention, the polytrimethylene terephthalate resin constituting the core portion may be a polytrimethylene terephthalate homopolymer or copolymer, or a mixture thereof with other mixable resin. Examples of a copolymerizable monomer of the polytrimethylene terephthalate copolymer include acid components, such as isophthalic acid, succinic acid and adipic acid; glycol components, such as 1,4-butanediol and 1,6-hexanediol; polytetramethylene glycols; and polyoxymethylene glycols. The content of these copolymerizable monomers is not particularly restricted; however, it is preferably 10% by mass or less since these monomers reduce the flexural rigidity of the copolymer. Examples of a polyester resin that can be mixed with a polytrimethylene terephthalate-based polymer include polyethylene terephthalates and polybutylene terephthalates, and the polyester resin may be mixed in an amount of 50% by mass or less.

The intrinsic viscosity [*η*] of the above-described polytrimethylene terephthalate is preferably 0.3 to 1.2, more preferably 0.6 to 1.1. When the intrinsic viscosity is lower than 0.3, the strength and the elongation of the resulting fiber are reduced, whereas when the intrinsic viscosity is higher than 1.2, the productivity is deteriorated due to the occurrence of fiber breakage caused by spinning. The intrinsic viscosity [*η*] can be measured in a 35°C o-chlorophenol solution using an Ostwald viscometer. Further, the melting peak temperature of the polytrimethylene terephthalate, which is determined by DSC in accordance with JIS K7121, is preferably 180°C to 240°C, more preferably 200°C to 235°C. When the melting peak temperature is in a range of 180 to 240°C, high weather resistance is attained, and the bending elastic modulus of the resulting composite fiber can be increased.

As additives in a mixture comprising the above-described polyester resin, for example, a plasticizer, a softening agent, an antistatic agent, a bulking agent, a matting agent, a heat stabilizer, a light stabilizer, a flame retardant, an antibacterial agent, a lubricant, an antioxidant, an ultraviolet absorber, and/or a crystal nucleating agent can be added within a range that does not impair the effects of the present invention.

The high-melting-point resin (A) constituting the core portion is, for example, preferably a high-melting-point polyolefin resin, particularly preferably a polypropylene resin, more preferably a crystalline homopolypropylene polymer, still more preferably an isotactic polypropylene.

In the core-sheath type composite fiber used in the present invention, the core portion is constituted by the high-melting-point resin (A) having a melting point of 150°C or higher, and this core portion is not melted even in a rubber vulcanization process. When the present inventor performed 15-minute vulcanization at 195°C, which is higher than the temperature used in ordinary industrial vulcanization conditions, and observed the cross-section of a cord embedded in a rubber after the vulcanization, it was found that, although the low-melting-point resin material (B) of the sheath portion was melted and its originally circular cross-section was deformed, the high-melting-point resin (A) of the core portion maintained the circular cross-sectional shape of the core portion after core-sheath composite spinning and, without being completely melted to form a melt, retained a tensile strength at break of not less than 150 N/mm² as a cord.

In this manner, the present inventor discovered that, as long as the melting point of the resin constituting the core portion of a cord is 150°C or higher, the cord is not melted or broken even when it is subjected to a 195°C heating treatment during vulcanization of a rubber article, and that the rubber-reinforcing fiber of the present invention can thus be obtained. The reason why the cord maintained its material strength and exhibited heat resistance even at a processing temperature higher than the intrinsic melting point of the resin as described above is believed to be because the melting point was increased to be higher than the intrinsic melting point of the resin since the cord was embedded in the rubber and thus vulcanized at a fixed length and this created a condition of fixed-length restriction where fiber shrinkage does not occur, which is different from a method of measuring the melting point without restricting the resin shape as in JIS K7121 and the like. It is known that, as a thermal phenomenon in a situation unique to fiber materials, the melting point is sometimes increased under such a measurement condition of "fixed-length restriction" where fiber shrinkage does not occur (Handbook of Fibers 2nd Edition, published on March 25, 1994; edited by The Society of Fiber Science and Technology, Japan; published by Maruzen Co., Ltd.; page 207, line 13). With regard to this phenomenon, the melting point of a substance is represented by a formula "Tm = ΔHm/ΔSm" and, in this formula, the crystallization degree and the equilibrium melting enthalpy (ΔHm) do not change for the same fiber resin. However, it has been considered that, when a tension is applied in the cord direction at a fixed length (or the cord is thus stretched) and thermal shrinkage of the cord during melting is inhibited, orientational relaxation of the molecular chains oriented along the cord direction hardly occurs due to melting and the melting enthalpy (ΔSm) is thus reduced, as a result of which the melting point is increased. In such a resin material of the present invention, however, there has not been known any finding that is obtained by examining a cord material presumed to form a melt at a resin melting point or higher in accordance with a JIS method at a temperature corresponding to a rubber vulcanization process and studying a resin material suitable for reinforcement of a rubber article, which resin material can be directly adhered to a rubber through thermal fusion and provide satisfactory tensile rigidity of the core portion even under heating in a vulcanization process.

As a preferred example of the present invention, when a polypropylene resin or a PTT resin is used as the resin having a melting point of 150°C or higher that constitutes the core portion, although the resulting cord has a lower modulus than known high-elasticity cords of 66 nylon, polyethylene terephthalate, aramid and the like that are conventionally used as tire cords, since the cord has an intermediate elastic modulus between those of such a conventional cord and a rubber, the cord can be arranged at a specific position in a tire where a conventional tire cord could not be arranged, which is one characteristic feature of the present invention.

For example, the production of a rubber article such as a tire includes a vulcanization process in which members composed of a rubber or a coated cord material are assembled and a molded unvulcanized original form such as a green tire is placed in a mold and subsequently pressed against the mold from inside by high-temperature and high-pressure steam using a rubber balloon-shaped compression equipment called "bladder". In this process, when the modulus of the cord is excessively high, the cord material sometimes does not extend and expand along with the rubber material in the course of transition from the state of being arranged in the molded unvulcanized original form such as a green tire to the state of being pressed against the mold by high-temperature and high-pressure steam and, in such a case, the cord serves as a so-called "cutting thread" (a thread that cuts a lump of clay or the like) to cause a defect such as cutting and separation of the rubber material assembled in the unvulcanized original form. Therefore, without implementing a countermeasure in the production, it is difficult to arrange a high-modulus cord in a tire by a conventional production method. Particularly, in a structure in which a cord is arranged along the tire circumferential direction in a tire side portion, since the cord is jointed in an annular form, a problem in the production that the cord, which is pressed by high-temperature and high-pressure steam and thereby bears a tension, moves in the tire radial direction while cutting the rubber material on the bead side is likely to occur. On the other hand, in the cord of the present invention, since its cord material is also more stretchy than a conventional high-elasticity cord, the production of a rubber article such as a tire can be carried out by a conventional method even when the rubber article has such a product structure or an arrangement in which a cord would serve as a "cutting thread" during the production and processing and thus could not be arranged. Such an increase in the freedom in the design of tire member arrangement is also a characteristic feature of the present invention.

In the present invention, the resin material (B) constituting the sheath portion comprises an olefin-based polymer (X) and a vulcanization accelerator (F) for obtaining an effect of fusing with an adherend rubber. By incorporating the vulcanization accelerator (F), the reaction of a rubber and the like are facilitated, so that the adhesion of the resin material (B) and the rubber can be further improved.

In the vulcanization of a rubber using sulfur, the reaction between the rubber and sulfur is extremely slow; therefore, the vulcanization accelerator (F) is "one which induces the generation of activated thiyl radical for facilitation of ring-opening of sulfur S8 ring, or a basic substance which reacts with sulfur and thereby activates sulfur via polysulfide", "examples of which include thiazole-based, sulfenamide-based, thiuram-based and dithiocarbamic acid-based vulcanization accelerators which generate a thiyl radical capable of activating sulfur; basic aldehyde-amine condensates; and guanidine-based vulcanization accelerators" (Takashi Watanabe and Yasushi Hirata: "Rubber Additive Utilization Technology"; published by Kogyo Chosakai Publishing Co., Ltd., pages 31 and 32), and the vulcanization accelerator (F) is usually a compound that is incorporated into a rubber composition for the purpose of facilitating vulcanization. Accordingly, there is found no particular case of, as in the present invention, examining incorporation of such a compound through mixing thereof into a resin composition, such as a fiber forming a composite with a rubber, and modification on the resin side at the time of vulcanization.

When the vulcanization accelerator (F), which is contained in the resin material (B) of the sheath portion of the rubber-reinforcing core-sheath fiber, comes close to an eight-membered ring of cyclic sulfur contained in an unvulcanized rubber and opens the ring and the cyclic sulfur is thereby converted into a transition state, an attractive force is generated between the molecules due to interaction of migrating electron pairs.

Further, such a charge transfer interaction facilitates the migration of a sulfur component contained in the rubber to the surface and inside of the resin material of the sheath portion. According to the investigation conducted by the present inventor on elemental analyses (EDX) of the sulfur atom distribution based on energy dispersive X-ray spectrometry using a scanning electron microscope, it was found that incorporation of the vulcanization accelerator (F) tends to increase the amount of the sulfur component distributed at the interface of the resin material of the sheath portion and that, depending on the case, the sulfur component migrating from an adherend rubber is distributed on the inner side than the interface of the resin material of the sheath portion, where no sulfur component is naturally found. In this manner, the interaction at the interface with a rubber is increased by the vulcanization accelerator (F) and, consequently, the adhesiveness can be enhanced.

Further, for the addition of the vulcanization accelerator, it is more preferred that the resin material (B) of the sheath portion of the rubber-reinforcing core-sheath fiber contain a component including a diene that is cross-linkable by sulfur. The reason for this is because, after the vulcanization accelerator (F) induces a polyvulcanized product to yield an intermediate, this polyvulcanized product exerts an effect of cross-linking the diene, and the inside of the resin material of the sheath portion of the fiber is thereby cross-linked.

Moreover, when this polyvulcanized product induces co-vulcanization between the diene moiety contained in the fiber and an adherend rubber, the adhesion with the rubber can be further improved.

The resin material (B) of the sheath portion of the rubber-reinforcing core-sheath fiber contains a component including a diene that is cross-linkable by sulfur; however, in the absence of a vulcanization accelerator component, the migration of the sulfur component from the adherend rubber, which is caused by chain transfer interaction, is limited. Furthermore, since an intermediate of a polyvulcanized product is not generated by the vulcanization accelerator even if migration of the sulfur component took place, vulcanization of the diene moiety is extremely slow also in the resin material (B) of the sheath portion of the rubber-reinforcing core-sheath fiber for the same reasons as to why the vulcanization of a rubber composition containing no vulcanization accelerator is extremely slow and such a rubber composition cannot thus be vulcanized within the period of an industrial rubber vulcanization process; therefore, cross-linking by the sulfur component is hardly provided, so that the adhesion-improving effect cannot be obtained.

The vulcanization accelerator (F) is, for example, a Lewis base compound (F1), examples of which include basic silica; primary, secondary and tertiary amines; organic acid salts of these amines, as well as adducts and salts thereof; aldehyde ammonia-based accelerators; and aldehyde amine-based accelerators. Examples of the compound (F2) capable of generating a thiyl radical include sulfenamide-based accelerators, guanidine-based accelerators, thiazole-based accelerators, thiuram-based accelerators and dithiocarbamic acid-based accelerators, which can activate sulfur by, for example, ring-opening a cyclic sulfur when a sulfur atom of the respective vulcanization accelerators comes close thereto in the system to convert the sulfur into a transition state and thereby generating an active vulcanization accelerator-polyvulcanized product complex.

The Lewis base compound (F1) is not particularly restricted as long as it is a compound that is a Lewis base in the definition of Lewis acid-base and can donate an electron pair. Examples thereof include nitrogen-containing compounds having a lone electron pair on a nitrogen atom and, specifically, among those vulcanization accelerators known in the rubber industry, a basic one can be used.

Specifically, the above-described basic compound (F1) is, for example, an aliphatic primary, secondary or tertiary amine having 5 to 20 carbon atoms, examples of which include:
acyclic monoamines, such as alkylamines (e.g., *n*-hexylamine and octylamine), dialkylamines (e.g., dibutylamine and di(2-ethylhexyl)amine) and trialkylamines (e.g., tributylamine and trioctylamine), as well as derivatives and salts thereof;
acyclic polyamines, such as ethylene diamine, diethylene triamine, triethylene tetramine, tetraethylene pentamine, pentaethylene hexamine, hexamethylene diamine and polyethylene imine, as well as derivatives and salts thereof;
alicyclic polyamines such as cyclohexylamine, as well as derivatives and salts thereof;
aliphatic polyamines such as hexamethylene tetramine, as well as derivatives and salts thereof;
aromatic monoamines, such as aniline, alkylaniline, diphenylaniline, 1-naphthylaniline and *N*-phenyl-1-naphthylamine, as well as derivatives and salts thereof; and
aromatic polyamine compounds, such as phenylene diamine, diaminotoluene, *N*-alkylphenylene diamine, benzidine, guanidines and *n*-butylaldehyde aniline, as well as derivatives thereof.

Examples of the guanidines include 1,3-diphenylguanidine, 1,3-di-*o*-tolylguanidine, 1-*o-*tolylbiguanide, di-*o*-tolylguanidine salt of dicatechol borate, 1,3-di-*o*-cumenylguanidine, 1,3-di-*o*-biphenylguanidine, and 1,3-di-*o*-cumenyl-2-propionyl guanidine. Thereamong, 1,3-diphenylguanidine is preferred because of its high reactivity.

Examples of an organic acid that forms a salt with the above-described amines include carboxylic acid, carbamic acid, 2-mercaptobenzothiazole, and dithiophosphoric acid. Examples of a substance that forms an adduct with the above-described amines include alcohols and oximes. Specific examples of an organic acid salt or adduct of the amines include n-butylamine acetate, dibutylamine oleate, hexamethylenediamine carbamate, and dicyclohexylamine salt of 2-mercaptobenzothiazole.

Examples of a nitrogen-containing heterocyclic compound that shows basicity by having a lone electron pair on a nitrogen atom include:
monocyclic nitrogen-containing compounds, such as pyrazole, imidazole, pyrazoline, imidazoline, pyridine, pyrazine, pyrimidine, and triazine, as well as derivatives thereof; and
bicyclic nitrogen-containing compounds, such as benzimidazole, purine, quinoline, pteridin, acridine, quinoxaline, and phthalazine, as well as derivatives thereof.

Examples of a heterocyclic compound having a heteroatom other than a nitrogen atom include heterocyclic compounds containing nitrogen and other heteroatom, such as oxazoline and thiazoline, as well as derivatives thereof.

The Lewis base compound (F1) may be classified as a non-proton-donating Lewis base compound (F11) which is a Lewis base compound having no active hydrogen in the Lewis base moiety, a Lewis base compound (F12) having one active hydrogen in the Lewis base moiety, or a Lewis base compound (F13) having two or more active hydrogens in the Lewis base moiety and, thereamong, the Lewis base compound (F1) is preferably the non-proton-donating Lewis base compound (F11) or the Lewis base compound (F12) having one active hydrogen atom in the Lewis base moiety, more preferably the non-proton-donating Lewis base compound (F11).

The reason for this is because, if the Lewis base compound (F1) is strongly polar when the olefin-based polymer (X) contained in the resin material (B) of the sheath portion is a non-polar polymer, the Lewis base compound (F1) hardly dissolves in the resin material (B) and is thus likely to form a bloomed layer on the resin surface. The smaller the number of active hydrogens in the Lewis base moiety and thus the lower the polarity of the Lewis base compound (F1), the less likely it is that a defect caused by a precipitate will occur between the resin material (B) and an adherend rubber and thus the more preferred it is.

The non-proton-donating Lewis base compound (F11) is not particularly restricted as long as it is a Lewis base compound having no active hydrogen in the Lewis base moiety, and examples of such a Lewis base compound containing nitrogen include compounds that have no active hydrogen on a nitrogen atom capable of donating unpaired electrons, such as acyclic tertiary amine compounds, alicyclic tertiary polyamine compounds, aromatic tertiary amine compounds, and nitrogen-containing heterocyclic compounds having no active hydrogen on a nitrogen atom.

The Lewis base compound (F12) having one active hydrogen in the Lewis base moiety is not particularly restricted as long as it is a Lewis base compound having one active hydrogen in the Lewis base moiety, and examples of such a Lewis base compound containing nitrogen include compounds that have one active hydrogen on a nitrogen atom capable of donating unpaired electrons, such as acyclic secondary amine compounds, alicyclic secondary polyamine compounds, and aromatic secondary amine compounds.

Examples of an alkali metal salt include basic inorganic metal compounds, such as formates, acetates, nitrates, carbonates, bicarbonates, oxides, hydroxides, and alkoxides of monovalent metals (e.g., lithium, sodium, and potassium), polyvalent metals (e.g., magnesium, calcium, zinc, copper, cobalt, manganese, lead, and iron) and the like.

Specific examples thereof include metal hydroxides, such as magnesium hydroxide, calcium hydroxide, sodium hydroxide, lithium hydroxide, potassium hydroxide, and copper hydroxide; metal oxides, such as magnesium oxide, calcium oxide, zinc oxide (zinc white), and copper oxide; and metal carbonates, such as magnesium carbonate, calcium carbonate, sodium carbonate, lithium carbonate, and potassium carbonate.

Thereamong, as an alkali metal salt, a metal hydroxide is preferred, and magnesium hydroxide is particularly preferred.

These metal salts are sometimes classified as vulcanization aids; however, in the present invention, they are classified as vulcanization accelerators.

Specific examples of the above-described other vulcanization accelerator (F2) include known vulcanization accelerators, such as thioureas, thiazoles, sulfenamides, thiurams, dithiocarbamates, and xanthates.

Examples of the thioureas include *N,N'*-diphenyl thiourea, trimethyl thiourea, *N,N'*-diethyl thiourea, *N,N'*-dimethyl thiourea, *N,N'*-dibutyl thiourea, ethylene thiourea, *N,N'*-diisopropyl thiourea, *N,N'*-dicyclohexyl thiourea, 1,3-di(*o*-tolyl)thiourea, 1,3-di(*p*-tolyl)thiourea, 1,1-diphenyl-2-thiourea, 2,5-dithiobiurea, guanyl thiourea, 1-(1-naphthyl)-2-thiourea, 1-phenyl-2-thiourea, *p*-tolyl thiourea, and *o*-tolyl thiourea. Thereamong, *N,N'*-diethyl thiourea, trimethyl thiourea, *N,N'*-diphenyl thiourea and *N,N'*-dimethyl thiourea are preferred because of their high reactivity.

Examples of the thiazoles include 2-mercaptobenzothiazole, di-2-benzothiazolyl disulfide, zinc salt of 2-mercaptobenzothiazole, cyclohexylamine salt of 2-mercaptobenzothiazole, 2-(*N,N*-diethylthiocarbamoylthio)benzothiazole, 2-(4'-morpholinodithio)benzothiazole, 4-methyl-2-mercaptobenzothiazole, di-(4-methyl-2-benzothiazolyl)disulfide, 5-chloro-2-mercaptobenzothiazole, sodium 2-mercaptobenzothiazole, 2-mercapto-6-nitrobenzothiazole, 2-mercapto-naphtho[1,2-*d*]thiazole, 2-mercapto-5-methoxybenzothiazole, and 6-amino-2-mercaptobenzothiazole. Thereamong, 2-mercaptobenzothiazole, di-2-benzothiazolyl disulfide, zinc salt of 2-mercaptobenzothiazole, cyclohexylamine salt of 2-mercaptobenzothiazole and 2-(4'-morpholinodithio)benzothiazole are preferred because of their high reactivity. Further, for example, di-2-benzothiazolyl disulfide and zinc salt of 2-mercaptobenzothiazole are particularly preferred since they are highly soluble even when added to a relatively nonpolar polymer and are, therefore, unlikely to induce a reduction in spinnability and the like caused by deterioration of the surface properties due to precipitation or the like.

Examples of the sulfenamides include *N*-cyclohexyl-2-benzothiazolyl sulfenamide, *N,N'*-dicyclohexyl-2-benzothiazolyl sulfenamide, *N*-*tert*-butyl-2-benzothiazolyl sulfenamide, *N*-oxydiethylene-2-benzothiazolyl sulfenamide, *N*-methyl-2-benzothiazolyl sulfenamide, *N*-ethyl-2-benzothiazolyl sulfenamide, *N*-propyl-2-benzothiazolyl sulfenamide, *N*-butyl-2-benzothiazolyl sulfenamide, *N*-pentyl-2-benzothiazolyl sulfenamide, *N*-hexyl-2-benzothiazolyl sulfenamide, *N*-pentyl-2-benzothiazolyl sulfenamide, *N*-octyl-2-benzothiazolyl sulfenamide, *N*-2-ethylhexyl-2-benzothiazolyl sulfenamide, *N*-decyl-2-benzothiazolyl sulfenamide, *N*-dodecyl-2-benzothiazolyl sulfenamide, *N*-stearyl-2-benzothiazolyl sulfenamide, *N,N*-dimethyl-2-benzothiazolyl sulfenamide, *N,N*-diethyl-2-benzothiazolyl sulfenamide, *N,N*-dipropyl-2-benzothiazolyl sulfenamide, *N,N*-dibutyl-2-benzothiazolyl sulfenamide, *N,N*-dipentyl-2-benzothiazolyl sulfenamide, *N,N*-dihexyl-2-benzothiazolyl sulfenamide, *N,N*-dipentyl-2-benzothiazolyl sulfenamide, *N,N*-dioctyl-2-benzothiazolyl sulfenamide, *N,N*-di-2-ethylhexylbenzothiazolyl sulfenamide, *N*-decyl-2-benzothiazolyl sulfenamide, *N,N*-didodecyl-2-benzothiazolyl sulfenamide, and *N,N*-distearyl-2-benzothiazolyl sulfenamide. Thereamong, *N*-cyclohexyl-2-benzothiazolyl sulfenamide, *N*-*tert*-butyl-2-benzothiazolyl sulfenamide and *N*-oxydiethylene-2-benzothiazole sulfenamide are preferred because of their high reactivity. Further, for example, *N*-cyclohexyl-2-benzothiazolyl sulfenamide and *N*-oxydiethylene-2-benzothiazolyl sulfenamide are particularly preferred since they are highly soluble even when added to a relatively nonpolar polymer and are, therefore, unlikely to induce a reduction in spinnability and the like caused by deterioration of the surface properties due to precipitation or the like.

Examples of the thiurams include tetramethyl thiuram disulfide, tetraethyl thiuram disulfide, tetrapropyl thiuram disulfide, tetraisopropyl thiuram disulfide, tetrabutyl thiuram disulfide, tetrapentyl thiuram disulfide, tetrahexyl thiuram disulfide, tetraheptyl thiuram disulfide, tetraoctyl thiuram disulfide, tetranonyl thiuram disulfide, tetradecyl thiuram disulfide, tetradodecyl thiuram disulfide, tetrastearyl thiuram disulfide, tetrabenzyl thiuram disulfide, tetrakis(2-ethylhexyl) thiuram disulfide, tetramethyl thiuram monosulfide, tetraethyl thiuram monosulfide, tetrapropyl thiuram monosulfide, tetraisopropyl thiuram monosulfide, tetrabutyl thiuram monosulfide, tetrapentyl thiuram monosulfide, tetrahexyl thiuram monosulfide, tetraheptyl thiuram monosulfide, tetraoctyl thiuram monosulfide, tetranonyl thiuram monosulfide, tetradecyl thiuram monosulfide, tetradodecyl thiuram monosulfide, tetrastearyl thiuram monosulfide, tetrabenzyl thiuram monosulfide, and dipentamethylene thiuram tetrasulfide. Thereamong, tetramethyl thiuram disulfide, tetraethyl thiuram disulfide, tetrabutyl thiuram disulfide and tetrakis(2-ethylhexyl) thiuram disulfide are preferred because of their high reactivity. Further, in the case of a polymer that is relatively non-polar, an increase in the amount of an alkyl group contained in the accelerator compound tends to increase the solubility and, since a reduction in spinnability and the like caused by deterioration of the surface properties due to precipitation or the like are thus unlikely to occur, for example, tetrabutyl thiuram disulfide and tetrakis(2-ethylhexyl) thiuram disulfide are particularly preferred.

Examples of dithiocarbamates include zinc dimethyldithiocarbamate, zinc diethyldithiocarbamate, zinc dipropyldithiocarbamate, zinc diisopropyldithiocarbamate, zinc dibutyldithiocarbamate, zinc dipentyldithiocarbamate, zinc dihexyldithiocarbamate, zinc diheptyldithiocarbamate, zinc dioctyldithiocarbamate, zinc di(2-ethylhexyl)dithiocarbamate, zinc didecyldithiocarbamate, zinc didodecyldithiocarbamate, zinc *N*-pentamethylene dithiocarbamate, zinc *N*-ethyl-*N*-phenyldithiocarbamate, zinc dibenzyldithiocarbamate, copper dimethyldithiocarbamate, copper diethyldithiocarbamate, copper dipropyldithiocarbamate, copper diisopropyldithiocarbamate, copper dibutyldithiocarbamate, copper dipentyldithiocarbamate, copper dihexyldithiocarbamate, copper diheptyldithiocarbamate, copper dioctyldithiocarbamate, copper di(2-ethylhexyl)dithiocarbamate, copper didecyldithiocarbamate, copper didodecyldithiocarbamate, copper *N*-pentamethylene dithiocarbamate, copper dibenzyldithiocarbamate, sodium dimethyldithiocarbamate, sodium diethyldithiocarbamate, sodium dipropyldithiocarbamate, sodium diisopropyldithiocarbamate, sodium dibutyldithiocarbamate, sodium dipentyldithiocarbamate, sodium dihexyldithiocarbamate, sodium diheptyldithiocarbamate, sodium dioctyldithiocarbamate, sodium di(2-ethylhexyl)dithiocarbamate, sodium didecyldithiocarbamate, sodium didodecyldithiocarbamate, sodium *N*-pentamethylene dithiocarbamate, sodium dibenzyldithiocarbamate, ferric dimethyldithiocarbamate, ferric diethyldithiocarbamate, ferric dipropyldithiocarbamate, ferric diisopropyldithiocarbamate, ferric dibutyldithiocarbamate, ferric dipentyldithiocarbamate, ferric dihexyldithiocarbamate, ferric diheptyldithiocarbamate, ferric dioctyldithiocarbamate , ferric di(2-ethylhexyl)dithiocarbamate, ferric didecyldithiocarbamate, ferric didodecyldithiocarbamate, ferric *N*-pentamethylene dithiocarbamate, and ferric dibenzyldithiocarbamate.

Thereamong, zinc *N*-ethyl-*N*-phenyldithiocarbamate, zinc dimethyldithiocarbamate, zinc diethyldithiocarbamate and zinc dibutyldithiocarbamate are desirable because of their high reactivity. Further, in the case of a polymer that is relatively non-polar, an increase in the amount of an alkyl group contained in the accelerator compound tends to increase the solubility and, since a reduction in spinnability and the like caused by deterioration of the surface properties due to precipitation or the like are thus unlikely to occur, for example, zinc dibutyldithiocarbamate is particularly preferred.

Examples of xanthates include zinc methylxanthate, zinc ethylxanthate, zinc propylxanthate, zinc isopropylxanthate, zinc butylxanthate, zinc pentylxanthate, zinc hexylxanthate, zinc heptylxanthate, zinc octylxanthate, zinc 2-ethylhexylxanthate, zinc decylxanthate, zinc dodecylxanthate, potassium methylxanthate, potassium ethylxanthate, potassium propylxanthate, potassium isopropylxanthate, potassium butylxanthate, potassium pentylxanthate, potassium hexylxanthate, potassium heptylxanthate, potassium octylxanthate, potassium 2-ethylhexylxanthate, potassium decylxanthate, potassium dodecylxanthate, sodium methylxanthate, sodium ethylxanthate, sodium propylxanthate, sodium isopropylxanthate, sodium butylxanthate, sodium pentylxanthate, sodium hexylxanthate, sodium heptylxanthate, sodium octylxanthate, sodium 2-ethylhexylxanthate, sodium decylxanthate, and sodium dodecylxanthate. Thereamong, zinc isopropylxanthate is preferred because of its high reactivity.

The vulcanization accelerator (F) may be used in the form of being preliminarily dispersed in an inorganic filler, an oil, a polymer or the like and incorporated into the resin material (B) of the sheath portion of a rubber-reinforcing core-sheath fiber. Such vulcanization accelerators and retardants may be used individually, or in combination of two or more thereof.

The content of the vulcanization accelerator (F) in the resin material (B) can be 0.05 to 20 parts by mass, particularly 0.2 to 5 parts by mass, with respect to 100 parts by mass of the olefin-based polymer (X). By controlling the content of the vulcanization accelerator (F) in the above-described range, the effect of improving the adhesion between the resin material (B) and a rubber can be favorably attained.

With the content of the vulcanization accelerator (F) in the resin material (B) of the sheath portion being less than 0.05 parts by mass, even when an eight-membered ring of cyclic sulfur contained in unvulcanized rubber comes close to the interface, since the content of the vulcanization accelerator is small and the attractive force of interaction induced by quantum movement of sulfur molecules is thus hardly obtained, the increase in the amount of sulfur migrating from the unvulcanized rubber to the surface of the sheath portion or into the resin material is very small, so that the effect of improving the adhesion with the rubber cannot be sufficiently obtained.

As for the sulfur migration, an elemental analysis (EDX) based on energy dispersive X-ray spectrometry by electron beam irradiation using a scanning electron microscope can be performed for the interface between the resin material of the sheath portion and the rubber, and the tendency of the movement of sulfur contained in the rubber into the resin material of the sheath portion can thereby be analyzed based on the count of the sulfur component distributed at the interface between the resin material of the sheath portion and the rubber or in the resin material of the sheath portion with respect to the average level of the count of the sulfur peaks in the adherend rubber.

When the amount of the vulcanization accelerator (F) is 0.2 parts by mass or greater, the amount of the sulfur component distributed on the side from the resin material interface of the sheath portion to the inside of the resin material becomes greater than the amount of the sulfur component distributed on the side of the adherend rubber and, an amount of 0.7 parts by mass or greater may, under certain circumstances depending on the combination of the vulcanization accelerator (F) and the resin material (B), lead to greater distribution of sulfur migrating to the resin material of the sheath portion than the distribution of sulfur in the adherend rubber as determined by EDX count, both of which cases are preferred since the rubber adhesion is further improved.

On the other hand, when the amount of the vulcanization accelerator (F) exceeds 20 parts by mass, since the vulcanization accelerator (F) is not uniformly distributed in the resin material (B) and phase separation thus occurs in some cases, the cohesive failure resistance of the resin material of the sheath portion is thereby impaired and this makes delamination more likely to occur in the resin material, as a result of which the adhesion with the rubber may be deteriorated.

Further, with the amount of the vulcanization accelerator (F) being greater than 5 parts by mass, when the vulcanization accelerator has a high polarity and thus hardly dissolves in the low-polarity resin material of the sheath portion, blooming may occur on the resin surface after spinning, and this may result in defective fusion and defective outer appearance.

It is noted here that a catalyst containing a Lewis base compound is used in the olefin-based polymer (X) in some cases; however, even if the Lewis base compound is thereby incorporated into the olefin-based polymer (X), the amount thereof is extremely small since the catalyst used for olefin polymerization is a solid catalyst that is generally supported on particles or the like and is recovered outside the system after the polymerization and the catalyst is coordinated on a transition metal. Accordingly, when the amount of the vulcanization accelerator (F) in the resin material (B) is about 0.05 parts by mass or less, since the Lewis base compound is not sufficiently incorporated into the resin material (B), the rubber adhesion-improving effect of the present invention cannot be attained.

In cases where the vulcanization accelerator (F) is incorporated into the resin material (B), a vulcanization accelerating aid that is generally used in tire rubber compositions, such as zinc oxide or stearic acid, can be used in combination. The amount of the vulcanization accelerating aid to be added to the resin material (B) is preferably 0.05 to 10 parts by mass with respect to 100 parts by mass of the olefin-based polymer (X).

In the present invention, it is preferred to incorporate the olefin-based polymer (X), which has a melting point lower than that of the resin material (A) constituting the core portion, into the resin material (B) constituting the sheath portion.

The olefin-based polymer (X) does not contain any Lewis base functional group-containing addition-polymerizable monomer, or if it does, the olefin-based polymer (X) is preferably an olefin-based polymer (Y) which contains a Lewis base functional group-containing addition-polymerizable monomer in an amount of 5% by mole or less, since the adhesion-improving effect of the present invention is more likely to be attained at such an amount.

The reason for this is because, when a Lewis base functional group-containing addition-polymerizable monomer is contained in an amount of greater than 5% by mole, even if the vulcanization accelerator (F) of the present invention is not incorporated, the inclusion of the basic functional group in the olefin-based polymer of the resin material (B) constituting the sheath portion can provide a vulcanization-facilitating effect through electron pair donation, so that the adhesion-improving effect of the present invention is reduced.

Further, when a polar Lewis base functional group-containing addition-polymerizable monomer is contained in a large amount, since the polarity of the olefin-based polymer of the resin material (B) constituting the sheath portion is increased relative to a low-polarity rubber polymer such as butadiene rubber, styrene-butadiene rubber, isoprene rubber or natural rubber, the compatibility of these polymers under heat is reduced, and this makes fusion between the resin material (B) of the sheath portion and the adherend rubber unlikely to occur.

In the olefin-based polymer (Y) which does not substantially contain a Lewis base functional group-containing addition-polymerizable monomer, specific examples of the Lewis base functional group include a pyridyl group, an *N*-substituted imidazolyl group, an *N*-substituted indazolyl group, a nitrile group, an azide group, an *N*-substituted imino group, an *N,N*-substituted amino group, an *N,N*-substituted aminooxy group, an *N,N,N*-substituted hydrazino group, a nitroso group, a nitro group, a nitrooxy group, a furyl group, a carbonyl group, a thiocarbonyl group, an alkoxy group, an alkyloxycarbonyl group, an *N,N*-substituted carbamoyl group, a thioalkoxy group, a substituted sulfinyl group, a substituted sulfonyl group, and a substituted sulfonic acid group. Examples of a monomer containing any of these functional groups include vinyl group-containing primary amines, vinyl group-containing secondary amines, vinyl group-containing amide compounds, and vinyl group-containing hydroxy compounds. Specific examples of the monomer include vinyl pyridine, vinyl indazole, allyl pyridine, allyl indazole, *N*-(1-ethenyl)amine, *N*-(2-propenyl)amine, *N*-(1-ethenyl)-*N*-methylamine, *N*-(2-propenyl)-*N*-methylamine, 1-ethenylamide, 2-propenylamide, *N*-methyl-(1-ethenyl)amide, *N*-methyl-(2-propenyl)amide, vinyl alcohol, 2-propen-1-ol, and 3-buten-1-ol.

The olefin-based polymer (X) preferably contains an olefin-based homopolymer or olefin-based copolymer (D) (excluding (C)), which is composed of addition-polymerizable monomers such as ethylene and propylene, or at least one polymer selected from the group of olefin-based random copolymers (C) such as ethylene-propylene copolymers. Depending on the intended purpose such as improvement in adhesion, spinnability or the like of the resin material (B) of the present invention, these olefin-based homopolymer or olefin-based copolymer (D) (excluding (C)) of addition-polymerizable monomers and olefin-based random copolymers (C) such as ethylene-propylene copolymers may be used not only individually but also in combination of a plurality thereof.

Preferred examples of the olefin-based homopolymer or olefin-based copolymer (D) (excluding (C)) include polypropylenes, polybutadienes, polyisoprenes, polynorbornenes, high-density polyethylenes, low-density polyethylenes and linear low-density polyethylenes, and the olefin-based homopolymer or olefin-based copolymer (D) (excluding (C)) is not particularly restricted. In the present invention, for example, a linear low-density polyethylene can be suitably used. These polymers can also be used as a mixture, rather than being used individually.

Thereamong, a copolymer which contains about 40 or less other monomers with respect to 1,000 monomers constituting repeating units can be used as the olefin-based copolymer (D).

Preferred examples of the olefin-based random copolymer (C) include ethylene-based copolymers composed of ethylene and a comonomer copolymerizable with ethylene, such as an *α*-olefin monomer; and propylene-based copolymers composed of propylene and a comonomer copolymerizable with propylene, such as an *α*-olefin monomer. The content of the copolymerizable *α*-olefin monomer is not particularly restricted; however, fusion with a rubber is easily achieved when the *α*-olefin monomer is copolymerized in a range of less than 80% by mole, and the fusibility with a rubber is further improved when the *α*-olefin monomer is copolymerized in a range of 50% by mole or less, both of which cases are preferred.

Examples of a comonomer that copolymerizes with ethylene or propylene include *α*-olefin monomers, non-conjugated dienes, and other monomers copolymerizable with polypropylene. Monomers that can be used as a comonomer are not restricted to a single kind, and preferred comonomers also include multi-component copolymers in which two or more kinds of monomers are used as in terpolymers.

Examples of the *α*-olefin include those having 2 or 4 to 20 carbon atoms, specifically, ethylene, 1-butene, 1-pentene, 1-hexene, 1-octene, 1-heptene, 4-methyl-pentene-1, 4-methyl-hexene-1, and 4,4-dimethylpentene-1. Examples of the non-conjugated dienes include 5-ethylidene-2-norbornene, dicyclopentadiene, and 1,4-hexadiene. Particularly, it is preferred to introduce a non-conjugated diene to ethylene and propylene as a third component since a component that is adhesive at the interface with an adherend rubber and has co-vulcanizability with sulfur is incorporated by the introduction of a component of an ethylene-propylene-diene copolymer (EPDM).

Other preferred examples of the above-described olefin-based copolymer include an ethylene-propylene random copolymer. The propylene content in the ethylene-propylene random copolymer is preferably 20 to 99.7% by mole, more preferably 75 to 99.5% by mole, still more preferably 85 to 98% by mole. A propylene content of less than 20% by mole may lead to insufficient impact resistance strength due to, for example, formation of a polyethylene crystal component. Meanwhile, a propylene content of 75% by mole or higher is generally preferred since good spinnability is attained. Further, when the propylene content is 99.7% by mole or less, addition polymerization of other monomer such as ethylene that copolymerizes with polypropylene leads to an increased molecular chain randomness, so that a cord that can be easily thermally fused is obtained. Moreover, the ethylene content is preferably 0.3% by mole to 80% by mole. An ethylene content of higher than 80% by mole is not preferred since the sheath portion does not have sufficient fracture resistance in the fusion thereof with an adherend rubber, and a crack is thus generated in the sheath portion, making fracture more likely to occur. Meanwhile, when the ethylene content is less than 0.3% by mole, since disturbance of the crystal caused by addition polymerization of the ethylene monomer with a polymer composed of polypropylene is reduced, the thermal fusibility of the resin material of the sheath portion tends to be deteriorated.

The reason why the olefin-based random copolymer (C) is preferred is because, for fusion with the rubber of a low-polarity adherend rubber (e.g., butadiene or SBR), when properties of the polymer are less crystalline and less oriented, stronger fusion is likely to be achieved. The term "random" used herein refers to a condition in which the block content, which is determined by NMR measurement of a repeating unit of the same vinyl compound moiety, is 20% or less of all aromatic vinyl compound moieties.

In the present invention, as the olefin-based random copolymer (C), it is preferred to use a random copolymer (C1) of propylene and ethylene and, particularly, a polypropylene-polyethylene random copolymer can be suitably used. Further, in the present invention, as an olefin-based random copolymer used in combination with the random copolymer (C1) of propylene and ethylene, an olefin-based random copolymer (C2) which contains a diene component cross-linkable with a sulfur component is preferred from the standpoint of the adhesiveness with a rubber, and examples thereof include ethylene-propylene-diene rubbers (EPDM), random copolymers of styrene and butadiene, and random copolymers of isobutene and isoprene, among which an EPDM, an SBR or the like can be suitably used. As for styrene-based polymers, in the present invention, a block copolymer or graft polymer that contains a monomolecular chain in which mainly styrene monomers are arranged in series is the styrene-based elastomer (E), and a random or alternating copolymer of styrene and butadiene is included in the olefin-based random copolymer (C2).

In this case, the diene content in the diene component-containing olefin-based random copolymer (C2) is preferably 1 to 20% by mass, more preferably 3 to 15% by mass. Further, in the present invention, a polypropylene or a polyethylene can be suitably used as the olefin-based homopolymer or olefin-based copolymer (D) (excluding (C)).

In a preferred example of the present invention, among the resin components constituting the resin material (B), the olefin-based random copolymer (C) is used as a main component in combination with, as an accessory component, at least one selected from the diene component-containing olefin-based random copolymer (C2) and the olefin-based homopolymer or olefin-based copolymer (D) (excluding (C)).

The reason for this because, in the resin material (B) of the sheath portion constituting the core-sheath fiber of the present invention, since the resin material of the core portion mainly bears the spinning stress generated in filamentous formation by fiber melt-spinning, even if the polymer constituting the resin matrix of the sheath portion is the conjugated diene-containing olefin-based copolymer (C2) such as EPDM, which is a rubber-like polymer that is an amorphous and soft polymeric substance, the surface of the core portion resin yielding a filamentous product is coated with the sheath component, and it is thus possible to perform spinning.

However, for example, when the spinning speed is high, a rubber-like polymer is likely to cause a defect in the spinning process, such as surface disturbance. Therefore, for example, it is preferred to mix the olefin-based random copolymer (C) (e.g., a copolymer of propylene and ethylene that is conventionally used) as a main component and a component having higher rigidity than a diene-containing rubber-like copolymer as an accessory component, since this improves the processability in spinning.

When the olefin-based random copolymer (C) is used as a main component in this manner, examples of the diene component-containing rubber-like polymer that is used as an accessory component include the olefin-based polymer (X), which falls under the Group R (rubbers having an unsaturated bond in the main chain) according to "JIS K6397 Rubbers and Lattices - Nomenclature".

Examples of the diene component-containing olefin-based random copolymer (C2) include, in addition to EPDM, copolymers of styrene and butadiene and copolymers of isobutene and isoprene, and examples of the olefin-based homopolymer or olefin-based copolymer (D) (excluding (C)) include polybutadienes, polyisoprenes, and polynorbornenes.

Specifically, it is preferred to use the diene component-containing olefin-based random copolymer (C2) in an amount of 5 to 95 parts by mass, particularly 15 to 80 parts by mass, more particularly 20 to 75 parts by mass, in a total of 100 parts by mass of the olefin-based random copolymers(C1) and (C2) and the olefin-based homopolymer or olefin-based copolymer (D) (excluding (C)) that are contained in the resin material (B). Further, preferably, the amount of the olefin-based random copolymer (C1) is 2 to 90 parts by mass, particularly 25 to 75 parts by mass, and the amount of the olefin-based homopolymer or olefin-based copolymer (D) (excluding (C)) is 2 to 75 parts by mass, particularly 5 to 20 parts by mass. By controlling the amounts of these copolymers in the above-described respective ranges, an effect of fusing with a rubber and satisfactory workability in cord processing can both be attained, which is preferred.

Examples of a method of producing a propylene-based copolymer include slurry polymerization, vapor-phase polymerization and liquid-phase bulk polymerization in which an olefin polymerization catalyst such as a Ziegler catalyst or a metallocene catalyst is used and, as a polymerization system, either a batch polymerization system or a continuous polymerization system may be employed.

In the present invention, it is preferred that the resin material (B) constituting the sheath portion further contain a compatibilizing agent (E) and, as the compatibilizing agent (E), it is preferred to use a styrene-based elastomer containing a monomolecular chain in which mainly styrene monomers are arranged in series (hereinafter, also referred to as "styrene block"). By incorporating the compatibilizing agent (E), the compatibility between the resin material (B) and a rubber is improved, and their adhesion can thereby be enhanced.

That is, the low-melting-point resin material (B) is a composition containing, as a main component, a polyolefin resin such a homopolymer (e.g., polyethylene or polypropylene) or an ethylene-propylene random copolymer, which is a resin composition having the melting point range defined in the present invention, and it is generally known that a mixed resin composition thereof has a phase-separated structure. Therefore, by adding a styrene-based elastomer as a block copolymer composed of a soft segment and a hard segment, compatibilization of the phases at their interface can be facilitated. The styrene-based elastomer preferably comprises a segment which shows adhesiveness at the interface between the high-melting-point resin (A) that is a core component and the resin material (B) that is a sheath component, and interacts with the molecular structure of a styrene-butadiene rubber (SBR), a butadiene rubber (BR), a butyl rubber (IIR), a polyisoprene structure-containing natural rubber (IR) or the like that is contained in the sheath component and adherend rubber, since such a styrene-based elastomer improves the adhesion with an adherend rubber. Particularly, when the adherend rubber contains a styrene-butadiene rubber (SBR), it is preferred to incorporate a styrene component-containing styrene-based block copolymer into the sheath component since this improves the compatibility of the sheath portion with the adherend rubber at their interface in fusion, and the adhesive strength is thereby improved.

It is noted here that, in the present invention, the term "block copolymer" means a copolymer composed of two or more monomer units, in which at least one of the monomer units is mainly connected with one another and arranged in a long series to form a monomolecular chain (block). Further, the term "styrene-based block copolymer" means a block copolymer that contains a block in which mainly styrene monomers are connected with each other and arranged in a long series.

As the styrene-based elastomer, specifically, a styrene-based block copolymer, a styrene-based graft polymer or the like can be used, and one which contains styrene and a conjugated diolefin compound is preferred. More specific examples of the styrene-based elastomer include styrene-butadiene-based copolymers, polystyrene-poly(ethylene/propylene)-based block copolymers, styrene-isoprene-based block copolymers, and completely or partially hydrogenated polymers that are obtained by hydrogenation of a double bond(s) of a block copolymer of styrene and butadiene. Further, the styrene-based elastomer may be modified with an amino group or maleic acid.

Examples of other styrene-based elastomer include those which have a polyolefin resin in the main chain and a vinyl-based polymer on a side chain, such as olefin-based graft copolymers. A graft copolymer is a polymer in which other polymer(s) is/are arranged in the form of branches at some positions on a copolymer constituting a skeleton and, in the present invention, a graft copolymer that contains a block in which mainly styrene monomers are connected with each other and arranged in a long series is defined as "styrene-based graft polymer".

Specific examples of the styrene-butadiene-based copolymers include block copolymers, such as styrene-butadiene copolymers (SBS), hydrogenated styrene-butadiene copolymers (HSBR), styrene-ethylene-butadiene copolymers (SEB), styrene-ethylene-butadiene-styrene copolymers (SEBS), styrene-butadiene-butylene-styrene copolymers (SBBS) and partially hydrogenated styrene-isoprene-butadiene-styrene copolymers, and hydrogenation products thereof. Examples of the polystyrene-poly(ethylene/propylene)-based block copolymers include polystyrene-poly(ethylene/propylene) block copolymers (SEP), polystyrene-poly(ethylene/propylene) block-polystyrenes (SEPS), and polystyrene-poly(ethylene-ethylene/propylene) block-polystyrenes (SEEPS), and examples of a polystyrene-poly(ethylene/butylene)-based block copolymer include block copolymers such as polystyrene-poly(ethylene/butylene) block-polystyrenes (SEBS) and polystyrene-poly(ethylene/butylene) block-crystalline polyolefins (SEBC), and hydrogenration products thereof. Examples of a styrene-isobutylene-based copolymer include polystyrene-polyisobutylene block copolymers (SIB) and polystyrene-polyisobutylene-polystyrene block copolymers (SIBS). Examples of a styrene-isoprene-based block copolymer include polystyrene-polyisoprene-polystyrene block copolymers (SIS).

Examples of the styrene-based graft polymer include olefin-based graft copolymers which have a low-density polyethylene as the main chain and a polystyrene on a side chain (LDPE-g-PS), and olefin-based graft copolymers which have a polypropylene as the main chain and a styrene-acrylonitrile copolymer on a side chain (PP-g-AS).

In the present invention, among these copolymers, a styrene-butadiene copolymer, a styrene-butadiene-butylene-styrene copolymer, and a styrene-ethylene-butadiene-styrene copolymer can be suitably used from the standpoints of adhesion and compatibility with a rubber. Further, in cases where the adherend rubber is a composition composed of a rubber having a low polarity (e.g., BR, SBR, or NR), a styrene-based block copolymer or a hydrogenation product thereof is preferred since superior compatibility is attained when the copolymer has no high-polarity functional group introduced by modification or the like.

Such a styrene-based elastomer may be used individually, or two or more thereof may be used in combination as appropriate.

In the resin material (B), the content of the compatibilizing agent (E) such as a styrene-based elastomer can be 0.1 to 30 parts by mass, particularly 1 to 15 parts by mass, with respect to 100 parts by mass of the olefin-based polymer (X). By controlling the content of the styrene-based elastomer (E) in the above-described range, the effect of improving the compatibility between the resin material (B) and a rubber can be favorably attained.

In the low-melting-point resin material (B), for the purpose of, for example, improving the adhesion at the interface with an adherend rubber composition, a thermoplastic rubber cross-linked with a polypropylene-based copolymer (TPV), any of "other thermoplastic elastomers (TPZ)" in the classification of thermoplastic elastomers described in JIS K6418, or the like may be incorporated in addition to the above-described block copolymer composed of a soft segment and a hard segment. These components enable to finely disperse a partially or highly cross-linked rubber into a continuous phase of the matrix of a low-melting-point thermoplastic resin composition. Examples of the cross-linked thermoplastic rubber include acrylonitrile-butadiene rubbers, natural rubbers, epoxidized natural rubbers, butyl rubbers, and ethylene-propylene-diene rubbers. Examples of the "other thermoplastic elastomers (TPZ)" include syndiotactic-1,2-polybutadiene resins and trans-polyisoprene resins.

In the above-described high-melting-point resin (A) and resin material (B), in order to add other properties such as oxidation resistance, an additive(s) normally added to a resin can also be incorporated within a range that does not markedly impair the effects of the present invention and the working efficiency in spinning and the like. As such additional components, conventionally known various additives that are used as additives for polyolefin resins, such as a filler (N), a nucleating agent, an antioxidant, a neutralizer, a light stabilizer, an ultraviolet absorber, a lubricant, an antistatic agent, a metal deactivator, a peroxide, an anti-microbial fungicide and a fluorescence whitener, and other additives can be used.

Examples of the filler (N) include inorganic particulate carriers, such as carbon black, alumina, silica alumina, magnesium chloride, calcium carbonate and talc, as well as smectite group, vermiculite group and mica group, such as montmorillonite, sauconite, beidellite, nontronite, saponite, hectorite, stevensite, bentonite and taeniolite; and porous organic carriers, such as polypropylenes, polyethylenes, polystyrenes, styrene-divinylbenzene copolymers, and acrylic acid-based copolymers. These fillers can be incorporated for reinforcement of the sheath portion when, for example, the sheath portion does not have sufficient fracture resistance and a crack is thus generated in the sheath portion to cause fracture during fusion of the sheath portion with an adherend rubber.

One preferred example of the filler (N) is a carbon black. By adding a carbon black as a filler to the resin material (B) of the sheath portion, electrical conductivity can be imparted to the resin material (B) by the carbon black, and the resulting cord can be colored in black.

Examples of the carbon black include those which are generally used in the tire industry, such as SAF, ISAF, HAF, FF, FEF and GPF, and these carbon blacks may be used individually, or in combination of two or more thereof.

In the resin material (B), the carbon black(s) can be incorporated in an amount of 0.1 to 100 parts by mass, preferably 1 to 30 parts by mass, with respect to 100 parts by mass of the olefin-based polymer (X). It is preferred to incorporate the carbon black(s) in an amount of 0.1 parts by mass or greater since the cord of the present invention is thereby colored in black and the color agrees with the black rubber of a tire or the like, so that no unevenness in color is generated by exposure of the cord or the like. It is also preferred to incorporate the carbon black(s) in an amount of 1 part by mass or greater since a polymer-reinforcing effect by the carbon black(s) can be attained. Meanwhile, when the amount of the carbon black(s) is greater than 30 parts by mass, the carbon black-containing resin is hardly fluidized at the time of melting, so that fiber breakage may occur during spinning. Further, when the amount of the carbon black(s) is greater than 100 parts by mass, since the amount of components such as a polymer component in the cord is relatively small, the effect of improving the compatibility between the resin material (B) and rubber is deteriorated, which is not preferred.

Specific examples of the additives include, as nucleating agents, sodium 2,2-methylene-bis(4,6-di-*t*-butylphenyl)phosphate, talc, sorbitol compounds such as 1,3,2,4-di(p-methylbenzylidene)sorbitol, and aluminum hydroxy-di(t-butylbenzoate).

Examples of the antioxidant include phenolic antioxidants, such as tris-(3,5-di-t-butyl-4-hydroxybenzyl)isocyanurate, 1,1,3-tris(2-methyl-4-hydroxy-5-*t*-butylphenyl)butane, octadecyl-3-(3,5-di-*t*-butyl-4-hydroxyphenyl)propionate, pentaerythrityl-tetrakis{3-(3,5-di-*t*-butyl-4-hydroxyphenyl)propionate}, 1,3,5-trimethyl-2,4,6-tris(3,5-di-*t*-butyl-4-hydroxybenzyl)benzene, 3,9-bis[2-{3-(3-*t*-butyl-4-hydroxy-5-methylphenyl)propionyloxy}-1,1-dimethylethyl]-2,4,8,1 0-tetraoxaspiro[5,5]undecane, and 1,3,5-tris(4-*t*-butyl-3-hydroxy-2,6-dimethylbenzyl)isocyanuric acid.

Examples of a phosphorus-based antioxidant include tris(mixed-, mono-, or di-nonylphenyl phosphite), tris(2,4-di-*t*-butylphenyl)phosphite, 4,4'-butylidene-bis(3-methyl-6-*t*-butylphenyl-di-tridecyl)phosphite, 1,1,3-tris(2-methyl-4-di-tridecylphosphite-5-*t*-butylphenyl)butane, bis(2,4-di-*t*-butylphenyl)pentaerythritol diphosphite, tetrakis(2,4-di-*t*-butylphenyl)-4,4'-biphenylene diphosphonite, tetrakis(2,4-di-*t*-butyl-5-methylphenyl)-4,4'-biphenylene diphosphonite, and bis(2,6-di-*t*-butyl-4-methylphenyl)pentaerythritol diphosphite. Examples of a sulfur-based antioxidant include distearyl thiodipropionate, dimyristyl thiodipropionate, and pentaerythritol tetrakis(3-lauryl thiopropionate).

Examples of the neutralizer include calcium stearate, zinc stearate, and hydrotalcite.

Examples of a hindered amine-based stabilizer include polycondensates of dimethyl succinate and 1-(2-hydroxyethyl)-4-hydroxy-2,2,6,6-tetramethylpiperidine, tetrakis(1,2,2,6,6-pentamethyl-4-piperidyl)-1,2,3,4-butane tetracarboxylate, bis(1,2,2,6,6-pentamethyl-4-piperidyl)sebacate, *N,N*-bis(3-aminopropyl)ethylenediamine-2,4-bis{*N*-butyl-*N*-(1,2,2,6,6-pentamethyl-4-piperid yl)amino}-6-chloro-1,3,5-triazine condensate, bis(2,2,6,6-tetramethyl-4-piperidyl)sebacate, poly[{6-(1,1,3,3-tetramethylbutyl)imino-1,3,5-triazine-2,4-diyl}{(2,2,6,6-tetramethyl-4-piperi dyl)imino}hexamethylene{2,2,6,6-tetramethyl-4-piperidyl}imino], and poly[(6-morpholino-*s*-triazine-2,4-diyl)[(2,2,6,6-tetramethyl-4-piperidyl)imino]hexamethylen e{(2,2,6,6-tetramethyl-4-piperidyl)imino}].

Examples of the lubricant include higher fatty acid amides, such as oleic acid amide, stearic acid amide, behenic acid amide, and ethylene bis-stearylamide; silicone oil; higher fatty acid esters; and metallic soaps, such as magnesium stearate, calcium stearate, zinc stearate, magnesium 12-hydroxystearate, calcium 12-hydroxystearate, zinc 12-hydroxystearate, magnesium arachidate, calcium arachidate, zinc arachidate, magnesium behenate, calcium behenate, zinc behenate, magnesium lignocerate, calcium lignocerate, zinc lignocerate, among which magnesium stearate, calcium stearate, zinc stearate, magnesium arachidate, calcium arachidate, zinc arachidate, magnesium behenate, calcium behenate, zinc behenate, magnesium lignocerate, calcium lignocerate, and zinc lignocerate are particularly preferred.

Examples of the antistatic agent include higher fatty acid glycerol esters, alkyl diethanolamines, alkyl diethanolamides, and alkyl diethanolamide fatty acid monoesters.

Examples of the ultraviolet absorber include 2-hydroxy-4-*n*-octoxybenzophenone, 2-(2'-hydroxy-3',5'-di-*t*-butylphenyl)-5-chlorobenzotriazole, and 2-(2'-hydroxy-3'-*t*-butyl-5'-methylphenyl)-5-chlorobenzotriazole.

Examples of the light stabilizer include *n*-hexadecyl-3,5-di-*t*-butyl-4-hydroxybenzoate, 2,4-di-*t*-butylphenyl-3',5'-di-*t*-butyl-4'-hydroxybenzoate, bis(2,2,6,6-tetramethyl-4-piperidyl)sebacate, dimethyl succinate-2-(4-hydroxy-2,2,6,6-tetramethyl-1-piperidyl)ethanol condensate, poly{[6-[(1,1,3,3-tetramethylbutyl)amino]-1,3,5-triazine-2,4-diyl][(2,2,6,6-tetramethyl-4-pipe ridyl)imino]hexamethylene[(2,2,6,6-tetramethyl-4-piperidyl)imino]}, and *N,N'*-bis(3-aminopropyl)ethylenediamine-2,4-bis[*N*-butyl-*N*-(1,2,2,6,6-pentamethyl-4-piperid yl)amino]-6-chloro-1,3,5-triazine condensate.

Particularly, from the standpoint of the combination of the core portion and the sheath portion, it is preferred to use a high-melting-point polyolefin resin for the core portion as the same olefin resin as that of the sheath portion since good compatibility is thereby attained between the core portion and the sheath portion. By using an olefin resin for both the core portion and the sheath portion, since a high bonding strength is attained at the resulting core-sheath polymer interface and sufficient peeling resistance is provided against interfacial peeling between the core portion and the sheath portion, which are different from those cases where different kinds of resins are used for the core portion and the sheath portion, the resultant can sufficiently exhibit properties as a composite fiber over a long period of time. Specifically, it is preferred to use a crystalline propylene homopolymer having a melting point of 150°C or higher as the high-melting-point resin (A) of the core portion and to use a polypropylene-based copolymer resin obtained by copolymerization of a polypropylene and a component copolymerizable with the polypropylene, such as an ethylene-propylene copolymer or an ethylene-butene-propylene ternary copolymer, particularly an ethylene-propylene random copolymer, as the low-melting-point resin material (B) of the sheath portion. The high-melting-point polyolefin resin of the core portion is particularly preferably an isotactic polypropylene since it provides good fiber-forming properties and the like in spinning.

In this case, the melt flow rate (MFR) of the high-melting point polyolefin resin (MFR1) and the melt flow rate of the low-melting-point polyolefin resin (MFR2) are not particularly restricted as long as they are in a range where these resins can be spun; however, the melt flow indices are preferably 0.3 to 100 g/10 min. The same applies to the melt flow index of the high-melting-point resin (A) used in the core portion other than the high-melting point polyolefin resin.

Particularly, the melt flow rate of the high-melting-point resin (A) including the high-melting point polyolefin resin (MFR1) can be selected to be in a range of preferably 0.3 to 15 g/10 min, particularly preferably 0.5 to 10 g/10 min, more preferably 1 to 5 g/10 min. The reason for this is because, with the MFR of the high-melting-point resin being in the above-described range, favorable spinning take-up and stretching properties are attained, and a melt of the high-melting-point resin of the core portion does not flow under heating of the vulcanization process in the production of a rubber article, so that the resultant can maintain a cord form.

The melt flow rate of the low-melting-point resin material (B) (MFR2) is preferably 5 g/10 min or higher, particularly preferably 5 to 70 g/10 min, more preferably 5 to 30 g/10 min. In order to improve the thermal fusibility of the resin material (B) of the sheath portion, a resin having a high MFR is preferably used since such a resin is likely to flow into and fill a gap with an adherend rubber. On the other hand, in cases where other reinforcing member (e.g., a ply cord or a bead core) is provided in the vicinity of where the composite fibers are arranged and when the rubber covering the composite fibers has an unintended void, an excessively high MFR may cause the molten resin material (B) to wet-spread on the surface of the fiber material of the ply cord or the bead core; therefore, the MFR is particularly preferably not higher than 70 g/10 min. The MFR is more preferably not higher than 30 g/10 min since, in this case, when the composite fibers are in contact with each other, such a phenomenon of fiber-fiber fusion in which the molten resin material (B) wet-spreads and forms aggregated fiber conjugates is less likely to occur. Further, an MFR of not higher than 20 g/10 min is still more preferred since it improves the fracture resistance of the resin of the sheath portion at the time of peeling the fused rubber, and the sheath portion is thus strongly adhered with the rubber.

MFR values (g/10 min) are determined in accordance with JIS K7210, and the MFR of a polypropylene-based resin material and that of a polyethylene-based resin material are measured at a temperature of 230°C under a load of 21.18 N (2,160 g) and at a temperature of 190°C under a load of 21.18 N (2,160 g), respectively.

With regard to the ratio of the core portion and the sheath portion in the composite fiber of the present invention, the ratio of the core portion in the composite fiber is preferably 10 to 95% by mass, more preferably 30 to 80% by mass. When the ratio of the core portion is excessively low, the strength of the composite fiber is reduced, so that sufficient reinforcing performance may not be attained. The ratio of the core portion is particularly preferably 50% by mass or higher since the reinforcing performance can be enhanced. However, when the ratio of the core portion is excessively high, the core portion is likely to be exposed from the composite fiber due to an excessively low ratio of the sheath portion, and sufficient adhesion with a rubber may thus not be attained.

As for the method of producing the composite fiber (monofilament) of the present invention, the composite fiber can be produced by a wet-heating and stretching method using two uniaxial extruders for the core material and the sheath material, along with a core-sheath type composite spinneret. The spinning temperature can be set at 140°C to 330°C, preferably 160 to 220°C, for the sheath component; and at 200 to 330°C, preferably 210°C to 300°C, for the core component. Wet-heating can be carried out using, for example, a wet-heating apparatus at 100°C, or a hot water bath at 95 to 100°C, preferably at 95 to 98°C. From the standpoint of thermal fusibility, it is not preferred to cool the resultant once and then perform re-heating and stretching, since crystallization of the sheath portion is thereby facilitated. The stretching ratio is preferably 1.5 or higher from the standpoint of crystallization of the core portion.

The fineness, namely the fiber thickness, of the reinforcing material composed of the rubber-reinforcing fiber of the present invention is preferably in a range of 100 dtex to 5,000 dtex. When the fiber thickness of the reinforcing material is less than 100 dtex, the strength is reduced, and the resulting cord is thus likely to be broken. Particularly, in the case of a tire, in order to inhibit cord breakage during the processings of various steps in the production of the tire, the fiber thickness of the reinforcing material is more preferably not less than 500 dtex. The upper limit of the fiber thickness of the reinforcing material is not particularly defined as long as the reinforcing material can be arranged in the members of a rubber article such as a tire; however, it is preferably 5,000 dtex or less, particularly preferably 4,000 dtex or less. The reason for this is because, in the case of a monofilament cord, not only a large fiber thickness leads to a lower spinning speed at the time of spinning and the economic efficiency in the processing is thus deteriorated, but also it is difficult to bend a thread having a large thickness at the time of winding the thread around a winding tool such as a bobbin and this deteriorates the working efficiency. In the present invention, the "fiber thickness" means a fiber size (in accordance with JIS L0101) which is determined for a monofilament itself in the case of a monofilament, or for a cord formed by bundling monofilaments together in the case of bundled monofilaments.

Further, one of the characteristic features of the monofilament cord of the present invention is that it is highly adhesive with a rubber even when the reinforcing material has a single fiber thickness of 50 dtex or greater. When the fiber thickness of the reinforcing material is less than 50 dtex, a problem in adhesion with a rubber is unlikely to occur even when the fibers are not adhered by an adhesive composition or through fusion between the fiber resin and a rubber. The reason for this is because, since a small single fiber diameter makes the cord-cutting stress smaller than the force that causes peeling of the adhered parts, the cord is broken before the cord and a rubber are detached at their interface when the adhesiveness is evaluated by peeling or the like. This phenomenon is also called "fluff adhesion" and can be observed at a single fiber thickness of less than 50 dtex, which is equivalent to the fluff thickness.

Therefore, even when there is no problem for a cord, a nonwoven fabric, a reinforcing material or the like that has a monofilament diameter of less than 50 dtex, a single fiber thickness of 50 dtex or greater, without adhesion provided by an adhesive composition or fusion between the fiber resin and a rubber, presents a problem in adhesion between a rubber and the reinforcing material. The monofilament of the present invention is characterized in that it is highly adhesive with a rubber and its cord end is fusible even when the reinforcing material has a single fiber thickness of 50 dtex or greater.

The rubber-fiber composite of the present invention is obtained by coating a reinforcing material composed of the above-described rubber-reinforcing fiber with a rubber. As a coating rubber used in the rubber-fiber composite of the present invention, a rubber species that is suitable for the rubber article to be reinforced and the site to which the coating rubber is to be applied can be selected as appropriate, and the coating rubber is not particularly restricted. The coating rubber is preferably a diene-containing rubber composition such as a diene-based rubber, particularly preferably such a rubber composition further containing a sulfur-based vulcanization agent. Examples of the diene-based rubber include natural rubbers, isoprene rubbers, butadiene rubbers, styrene-butadiene rubbers and chloroprene rubbers, and a rubber composition containing a natural rubber or butadiene rubber is preferred.

The length of the reinforcing material composed of the composite fiber is preferably 10 mm or greater, and the longer the reinforcing material, the more preferred it is. When the length of the reinforcing material composed of the composite fiber is less than 10 mm, since integration of the reinforcing material with a rubber requires to employ a method of, for example, kneading the reinforcing material into the rubber and extruding the resultant, it is thus difficult to orient the reinforcing material in a single direction and to rubber-coat the reinforcing material. Further, the difference between a short fiber and a long fiber corresponds to the difference in whether the fiber end acts as a free end or as a fixed end. The longer the fiber, the further can the tension-bearing capacity, which is a characteristic feature of long fibers, be improved; therefore, by appropriately arranging the rubber-fiber composite, the desired performance is more likely to be attained in a rubber article such as a tire.

In the present invention, the mode of a fiber assembly formed by the reinforcing material of the core-sheath composite fiber is not particularly restricted; however, it is preferably a monofilament or a cord in which 10 or less monofilaments are bundled, more preferably a monofilament cord. The reason for this is because, if the assembly of the core-sheath fibers of the present invention is in the fiber form of a cord in which more than 10 monofilaments are bundled, a twisted cord, a nonwoven fabric or a textile, since the low-melting-point polyolefin resin constituting the sheath portion is melted when the fiber assembly is vulcanized in a rubber, the filaments are fused with each other and the resulting molten bodies permeate each other, whereby an aggregated foreign material may be formed in a rubber article. When such a foreign material is generated, a crack may develop from the aggregated foreign material in the rubber article due to strain generated by rolling as in the use of a tire, and this may cause separation. Accordingly, when the core-sheath fibers form a fiber assembly in a rubber article, since the greater the number of bundled filaments, the less likely the rubber permeate between the resulting cords and the more likely an aggregated foreign material is formed, the industrial use of such a rubber article practically has a problem in durability; therefore, in a fiber structure of a twisted cord, a nonwoven fabric or a textile, it is generally preferred that the number of bundled filaments in a cord be 10 or less.

Further, for the same reason as described above, with regard to the fiber arrangement in a rubber article, it is preferred that monofilament cords of the core-sheath composite fiber do not substantially intersect with each other in the composite, that is, a smaller number of contact points between the monofilament cords is more preferred. Moreover, when the cords are arranged in a paralleled manner, since melting of the resin of the sheath portion resin and thus infiltration of plural cords with each other are inhibited, a rubber article can be reinforced without any morphological change such as formation of a fiber aggregate, which is preferred. When arranging the core-sheath composite fiber of the present invention in a rubber article, it is preferred to prevent the core-sheath composite fiber from coming into contact with the adhesive-treated surface of other cord, and it is more preferred to incorporate a rubber between the adhesive-treated cord and the core-sheath composite fiber. The reason for this is because, even at the melt flow index of the low-melting-point olefin-based polymer of the present invention, when a melt of the molten polymer wet-spreads on the adhesive-treated surface of other cord, the melt is incorporated into a gap between the adhesive-treated cord and a rubber, and this causes a problem that adhesion of the adhesive-treated cord surface with the rubber is inhibited. Therefore, when the rubber article is a pneumatic tire, it is preferred to adopt an arrangement in which, for example, a rubber is incorporated between the core-sheath composite fiber of the present invention and cords having an adhesive-treated surface, such as carcass plys, belts and beads, and the outer periphery of these cords having an adhesive-treated surface and the core-sheath composite fiber of the present invention are thereby prevented from coming into contact with each other.

In the present invention, the reinforcing material composed of the core-sheath fiber can be coated with a rubber in a state of being oriented in a single direction. By using the reinforcing material composed of the core-sheath fiber in a state of being oriented in a single direction, a tension applied to a rubber can be taken up by the reinforcing material; therefore, when the reinforcing material is used for a tire reinforcement application, for example, an effect of improving the cut resistance and an effect of dispersing the stress in the tire can be obtained, which is preferred. In this manner, by taking advantage of anisotropy that is an intrinsic property of fibers to allow the reinforcing material to bear the tension, the strength in the fiber axis direction can be utilized to reduce the amount of the rubber to be used, and this consequently enables to attain an effect of improving the tire fuel efficiency through a reduction in tire weight.

The end count of the reinforcing material in the composite of the present invention is preferably 5 to 75 per a width of 50 mm. When the end count is excessively small, a sufficient reinforcing effect may not be obtained, whereas an excessively high end count may lead to an increase in weight, neither of which cases is preferred. The composite of the present invention may be arranged in a single layer or in two or more layers at each part to be reinforced as long as it does not cause a problem in the production of a rubber article to be reinforced, and the number of layers to be arranged is not particularly restricted.

As described above, the rubber-fiber composite of the present invention can be suitably used for reinforcement of various rubber articles such as tires, and is capable of achieving the desired reinforcing performance while inhibiting an increase in the rubber article thickness. Particularly, when the composite of the present invention is used for reinforcement of a tire, the composite of the present invention is more useful as an insert, a flipper, a chipper, a chafer (canvas chafer) member or the like, which is used together with a skeletal material in order to improve the tire driving stability and the like through suppression of tire vibration/noise, improvement of the cut resistance or enhancement of the effect of reducing strain during tire deformation, than as a skeletal material which maintains the tire internal pressure and is thus responsible for the strength of the tire.

The post-vulcanization tensile strength at break of the reinforcing material in the rubber-fiber composite of the present invention is preferably not less than 29 N/mm², more preferably not less than 40 N/mm², still more preferably not less than 90 N/mm², particularly preferably not less than 150 N/mm², and the higher the tensile strength at break, the more preferred it is. In the composite fiber of the present invention, although the sheath portion fuses with a rubber and is thus thermally deformed at a vulcanization temperature when the rubber is processed, the core portion is hardly thermally deformed and is thus not melted and broken in the fiber axis direction of the composite fiber. Accordingly, since the resin portion is continuously provided along the fiber axis direction, a strength of not less than 29 N/mm², which is higher than the rubber breaking strength, can be attained. This consequently makes the composite an anisotropic material that has a sufficient rubber breaking strength in the fiber axis direction; therefore, a rubber article in which this composite is arranged can attain a function of, for example, bearing strain in a such a specific direction. When the tensile strength at break of the reinforcing material is less than 29 N/mm², sufficient reinforcing performance may not be obtained in the rubber article after vulcanization. The rubber-fiber composite of the present invention is capable of exhibiting sufficient reinforcing performance even when it is vulcanized at an ordinary vulcanization temperature of 150°C to 200°C after being arranged in a desired part of a rubber article to be reinforced. Therefore, as a reinforcing material of a rubber article such as a tire, the rubber-fiber composite of the present invention can exhibit sufficient reinforcing performance in the applications for, for example, reinforcement of bead portions and side wall portions, such as an insert, a flipper, a chipper and a chafer as described above, as well as reinforcement of a tread portion such as a crown portion-reinforcing layer.

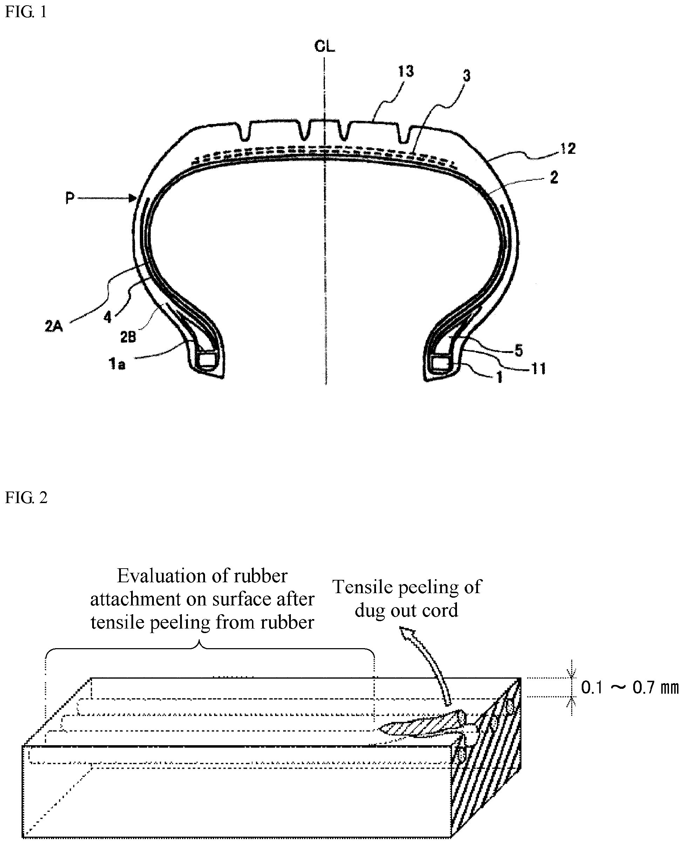

FIG. 1 is a schematic cross-sectional view that illustrates one example of the pneumatic tire of the present invention. The illustrated tire comprises: a pair of bead portions 11; a pair of side wall portions 12, which continuously extend on the tire radial-direction outer side from the respective bead portions 11; and a tread portion 13 which extends between the pair of the side wall portions 12 and forms a ground-contacting portion. The illustrated tire has, as its skeleton, a carcass layer 2 which is composed of at least one carcass ply that toroidally extends between bead cores 1 each embedded in the pair of the bead portions 11, and further comprises a belt layer 3 which is arranged on the tire radial-direction outer side of the carcass layer 2 in the crown portion and composed of at least two belts. In addition, although not illustrated in the drawing, an inner liner is arranged on the tire radial-direction inner side of the carcass layer 2. The reference numeral 5 in FIG. 1 represents a bead filler.

The pneumatic tire of the present invention comprises a reinforcing layer composed of the above-described rubber-fiber composite of the present invention, and this allows the pneumatic tire of the present invention to have superior durability than conventional tires. In the tire of the present invention, the arrangement position of the reinforcing layer is not particularly restricted and, for example, as illustrated, a reinforcing layer 4 composed of the composite of the present invention can be arranged in at least a part of the bead portions 11 and the side wall portions 12. By arranging the reinforcing layer 4 in the bead portions 11 and the side wall portions 12, the generation of vibration in the tire side portion is inhibited, so that the generation of noise during traveling can be suppressed. In a tire during traveling, the larger the amplitude of the tire wall vibration, the larger is the air vibration, i.e., the traveling noise generated on the tire side surface; however, by arranging the reinforcing layer 4, since vibration of the tire side surface can be suppressed due to the tensile force of the composite fiber, the sound generated from the tire side surface is reduced, whereby the noise such as pass-by noise can be reduced. In addition, since the reinforcing layer 4 composed of the composite of the present invention is thinner than a conventional reinforcing layer constituted by a rubberized cord layer, there is no disadvantage associated with an increase in the thickness of the side portion. Further, since the tire side portion has a temperature of up to about 60°C during normal tire traveling, the composite of the present invention can be applied to a rubber article such as a tire as long as the melting point of a low-melting-point polyolefin-based polymer in the sheath portion is 80°C or higher. Moreover, during high-strain traveling (e.g., traveling with a flat tire) when the tire bears a temperature of about 110°C, as long as the melting point of the low-melting-point olefin-based polymer in the sheath portion of the present invention is 120°C or higher, since this melting point is equivalent to the softening point of an adhesive composition that is composed of resorcin, formalin and latex and conventionally used for adhesion treatment of the tire cord surface, it is believed to be possible to ensure thermal durability in the general market where tire cords are conventionally used; therefore, the composite of the present invention can be used as a cord member for reinforcement of an ordinary tire even under severe temperature conditions during traveling that are demanded on the market, which is particularly preferred. The melting point is more preferably 135°C or higher since it makes it possible to apply the composite of the present invention to racing tires and the like in which more stringent durability is required under high-strain and high-temperature conditions than in those tires on the general market.

In the present invention, the reinforcing layer 4 may be arranged in at least a part of the bead portions 11 and the side wall portions 12, and this enables to obtain the expected effects of the present invention by modifying the displacement and the strain distribution during tire rolling with a tension born by the composite fiber in the reinforcing layer 4. Preferably, the reinforcing layer 4 is arranged between the bead filler 5 and a main body 2A of the carcass ply extending between the pair of the bead portions 11 in a region from a tire radial-direction outer end 1a of the bead core 1 to a position P located on the tire shoulder side than the tire maximum width position. Such arrangement of the reinforcing layer 4 in this region is most effective for reduction of noise during traveling and improvement of the tire driving stability.

When the distance from the lower end of the bead core 1 to the upper end of the belt layer 3 in the tread portion is defined as the tire cross-sectional height in a state where the tire is mounted on an application rim, inflated to a prescribed internal pressure and subjected to a prescribed load, the position P can be located at a position of 65% to 85% of the tire cross-sectional height. The term "application rim" used herein refers to a rim defined by an industrial standard that is valid in each region where the tire is manufactured and used, such as JATMA (Japan Automobile Tyre Manufacturers Association) Year Book in Japan, ETRTO (European Tyre and Rim Technical Organisation) Standard Manual in Europe, or TRA (The Tire and Rim Association Inc.) Year Book in the U.S.; the term "prescribed internal pressure" refers to an inner pressure (maximum air pressure) that corresponds to the tire maximum load capacity defined by a standard of JATMA or the like for a tire of an application size mounted on an application rim; and the term "prescribed load" refers to the maximum mass that is allowable on the tire according to the above-described standard.

In the present invention, since the cut surface of the cord end is fused with a rubber at the respective ends of the reinforcing layer 4, there is no restriction associated with crack development from a non-adhered part between the cord end and the rubber due to strain, so that the reinforcing layer 4 can be arranged in a tire portion that is subjected to high strain, which was difficult in the past. Examples of the arrangement of members in such a tire include a case where one end of the reinforcing layer 4 can be arranged at the position P on the tire shoulder side than a tire width-direction end 2B of the carcass ply. Under high-internal pressure and high-load tire traveling conditions, when a conventional cord material having non-adhered ends are laminated on an insert member or the like of the reinforcing layer 4 at such a position, the reinforcing layer 4 and the carcass ply form intersecting layers having different cord lengthwise directions between the layers. In cases where the reinforcing layer 4 is arranged in such a manner to constitute a layer intersecting with the carcass ply in this manner, since cracks are developed from the end surface of the non-adhered part of the reinforcing layer 4 when strain stress such as shear deformation is repeatedly input between the carcass ply and the intersecting reinforcing layer 4 in association with traveling, the durability cannot be increased in the region from the tire side to the respective bead portions. Thus, in the market, except for those tires having such a special structure that is reinforced with a rubber or other member to inhibit crack development from the end surface of non-adhered part, hardly any tire having the ends of the reinforcing layer 4 in the same region has been put into practical use. Concerns associated with a crack on the end surface of non-adhered part at the cord end are not limited to such a tire structure; therefore, in pneumatic tires that are increasingly reduced in weight toward the future, it is particularly desired that such ends be tightly adhered.

In the present invention, the reinforcing layer 4 may be arranged such that the fiber axis direction of the reinforcing material is aligned with any direction; however, particularly, the reinforcing layer 4 is preferably arranged such that the orientation direction of the reinforcing material is substantially the same as the tire circumferential direction, or such that the orientation direction of the reinforcing material is substantially at an angle of 30° to 90° with respect to the tire radial direction. As for the noise reduction effect and the driving stability-improving effect, high effects can be obtained since vibration of the tire side portion in the tire transverse direction can be suppressed by the tensile force of the reinforcing material regardless of whether the orientation direction of the reinforcing material is aligned with the tire circumferential direction or at an angle of 30° to 90° with respect to the tire radial direction; however, comparing these cases, higher effects are obtained when the orientation direction of the reinforcing material is aligned with the tire circumferential direction. The reason for this is believed to be because, since the carcass ply cords of a tire are arranged along the tire radial direction, for inhibition of displacement caused by an increase in the gaps between the carcass ply cords, it is more effective to align the orientation direction of the reinforcing material with the tire circumferential direction. Therefore, as long as there is no problem in workability and the like in the production, the angle at which a member is arranged is preferably 30° or larger with respect to the tire radial direction since a high effect of inhibiting displacement caused by an increase in the gaps between the carcass ply cords is attained, and the angle at which a member is arranged is particularly preferably 45° or larger, more preferably 90°, with respect to the tire radial direction.

With regard to improvement of the driving stability, in a tire structure composed of an air film that is supported by a tension applied thereto by an internal pressure generated as a result of inflating a rubber layer composed of a carcass ply toroidally extending between bead cores, it is expected that the parallel arrangement of carcass ply cords reinforcing the regions from the respective bead portions to the tread portion is less disturbed when displacement, in which the gaps between the carcass ply cords are increased in the tire side portions due to a change in irregularity along the film anti-plane direction, buckling or the like, is suppressed and thus small. When such disturbance in the parallel arrangement of the cords is reduced, a situation in which the stress is unlikely to be transmitted due to disturbance in the parallel arrangement of the carcass ply cords is further improved in the process where the steering force or the like generated by vehicle steering transmits stress from the wheel through the carcass ply to the tire tread portion that is in contact with the ground; therefore, transmission of operation-related stress (e.g., steering force) along the film in-plane direction is expected to be improved, and the driving stability (e.g., steering response) is believed to be thereby enhanced. Further, as for the effect of suppressing the displacement in which the gaps between the carcass ply cords are increased, it is particularly effective and preferred to arrange the reinforcing layer 4 along the tire circumferential direction.

The tire of the present invention can be produced by arranging, at the time of molding a green tire, the above-described composite of the present invention in those regions of the bead portions 11 and the side wall portions 12 that are desired to be reinforced, and subsequently vulcanizing the resultant for 3 to 50 minutes at a vulcanization temperature of 140°C to 190°C in accordance with a conventional method. Specifically, for example, in cases where the reinforcing layer 4 is arranged such that the fiber axis direction of the reinforcing material is aligned with the tire circumferential direction, the composite can be arranged in such a manner to form a spirally wound structure along the tire radial direction.

### EXAMPLES

The present invention will now be described in more detail by way of examples thereof.

As material thermoplastic resins, the resins for core and sheath materials shown in Table 5 below were used after being dried using a vacuum dryer.

### (Examples 1 to 14 and Comparative Examples 1 to 10)

Using the respective materials shown in Tables 1 to 5 below as a core component and a sheath component and two cp50-mm uniaxial extruders for the core material and the sheath material along with a core-sheath type composite spinneret having an orifice size of 1.0 mm, the materials were melt-spun at the respective spinning temperatures shown in Tables below and a spinning rate of 90 m/min while adjusting the discharge amount such that a sheath-core ratio of 4:6 was attained in terms of mass ratio. The resultants were subsequently stretched in a 98°C hot water bath at a stretching ratio of 1.5, whereby core-sheath type composite monofilaments having a fineness of 550 dtex were obtained.

The thus obtained core-sheath type composite monofilaments were each coated with an unvulcanized rubber composition having the formulation shown in Table 7, whereby rubber-fiber composites were prepared. These rubber-fiber composites were each applied as a reinforcing layer to produce test tires of Examples and Comparative Examples at a tire size of 205/55R15. The thus obtained test tires each had a carcass layer composed of a single carcass ply as a skeleton and were equipped with a belt layer formed by two belts arranged on the tire radial-direction outer side of the carcass layer in the crown portion. In addition, between the main body of the carcass ply and the bead fillers of each test tire in a 35 mm-wide region of the side wall portion from the tire radial-direction outer end of the bead core to the tire maximum width position, each of the core-sheath type composite monofilaments was arranged at a total end count of 45 per a width of 50 mm such that the orientation direction of the reinforcing material was substantially aligned with the tire circumferential direction. As for the vulcanization conditions in the tire production, vulcanization was performed at 185°C for 16 minutes.

### i) Initial Cord Adhesiveness of Tire

From each of the test tires of Comparative Examples and Examples, a test sample piece containing the cord of the present invention was cut out at the rim-line height of a bead portion, and a fiber cord dug out of this sample piece was peeled off from a vulcanized product at a rate of 30 cm/min. For the thus peeled cord, the rubber adhesion state was observed and ranked in accordance with Table 6 below, and the rubber adhesion rate (rubber attachment) was checked, the results of which are shown in Tables 1 to 4 below as initial adhesiveness.

### ii) Cord Adhesiveness after Tire Fatigue

The test tires of Comparative Examples and Examples were each fitted to the application rim (standard rim) prescribed in the JATMA Year Book 2015 Standard, and the internal pressure was adjusted to 200 kPa in a room of 25 ± 2°C. Each tire was left to stand for 24 hours, and the tire air pressure was subsequently adjusted again, after which 120% of the load prescribed in the JATMA Standard (load: 564 kgf, air pressure: 200 kPa) was applied to the tire and the tire was made to run continuously on a drum of about 3 m in diameter at a speed of 60 km/h over a distance of 50,000 km, whereby thermal degradation and fatigue in running were input to each test tire of Comparative Examples and Examples under "conditions close to ordinary urban street traveling but with a higher load". From each tire, a test sample piece containing the cord of the present invention was cut out at the rim-line height of a bead portion, and a fiber cord dug out of this sample piece was peeled off from a vulcanized product at a rate of 30 cm/min. For the thus peeled cord, the rubber adhesion state was observed and ranked in accordance with Table 6 below, and the rubber adhesion rate (rubber attachment) was checked, the results of which are shown in Tables 1 to 4 below as adhesiveness after fatigue.

As for the preparation of each test sample piece containing fiber cords, as illustrated in FIG. 2, the fiber cords were first cut out along the cord axis direction, and a test piece was subsequently prepared by cutting out the rubber such that the rubber remains at a thickness of about 0.1 to 0.7 mm or so from the cord surface, after which a fiber cord dug out therefrom was peeled off from the test piece using a tensile tester, followed by observation of the rubber adhesion state of the thus peeled cord. In the present invention, the form and the preparation method of the test sample piece are not particularly restricted as long as it is a method in which a single cord is pulled and peeled from the rubber of a tire after running and the rubber adhesion state of the peeled surface can be observed.

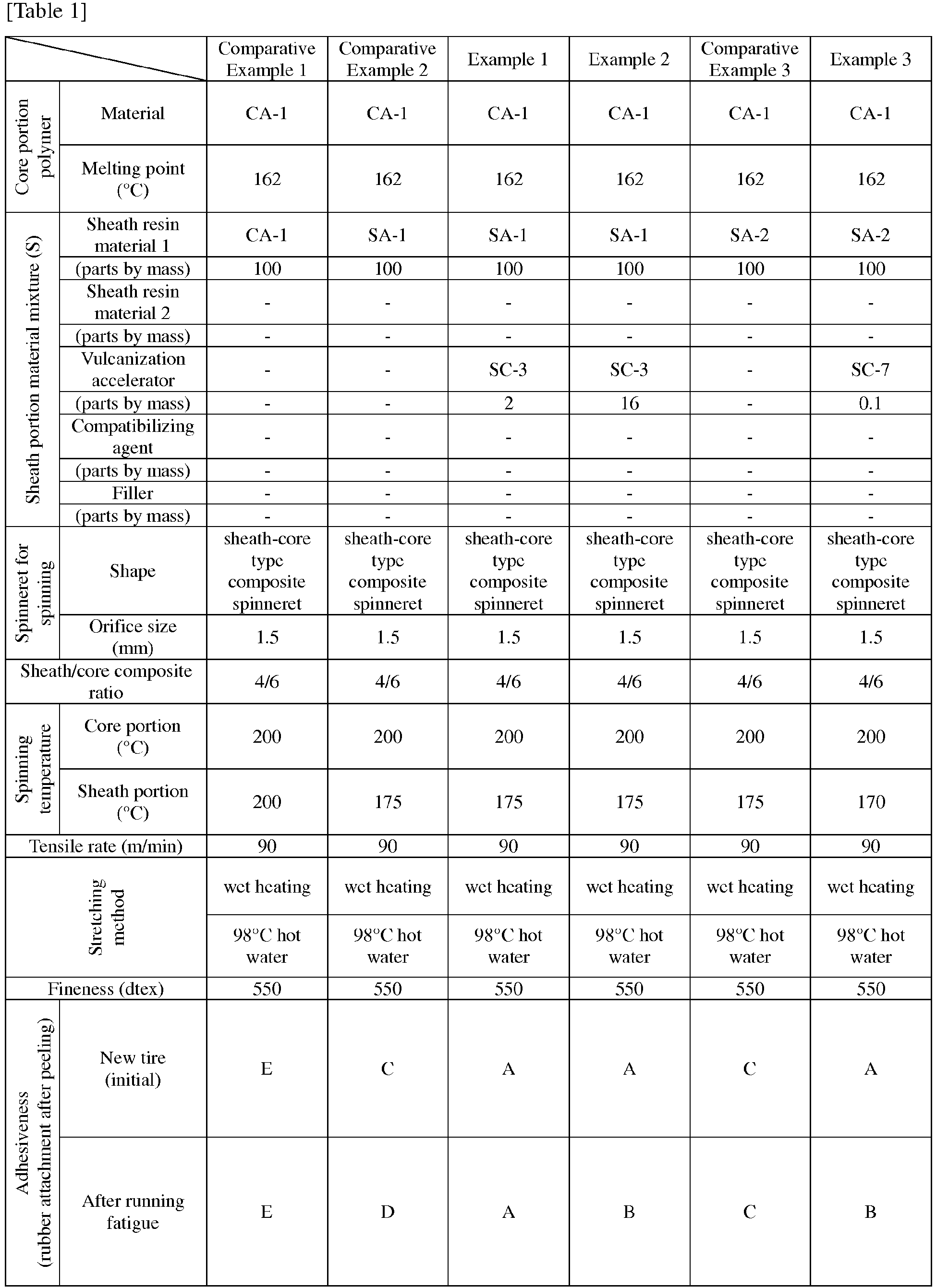

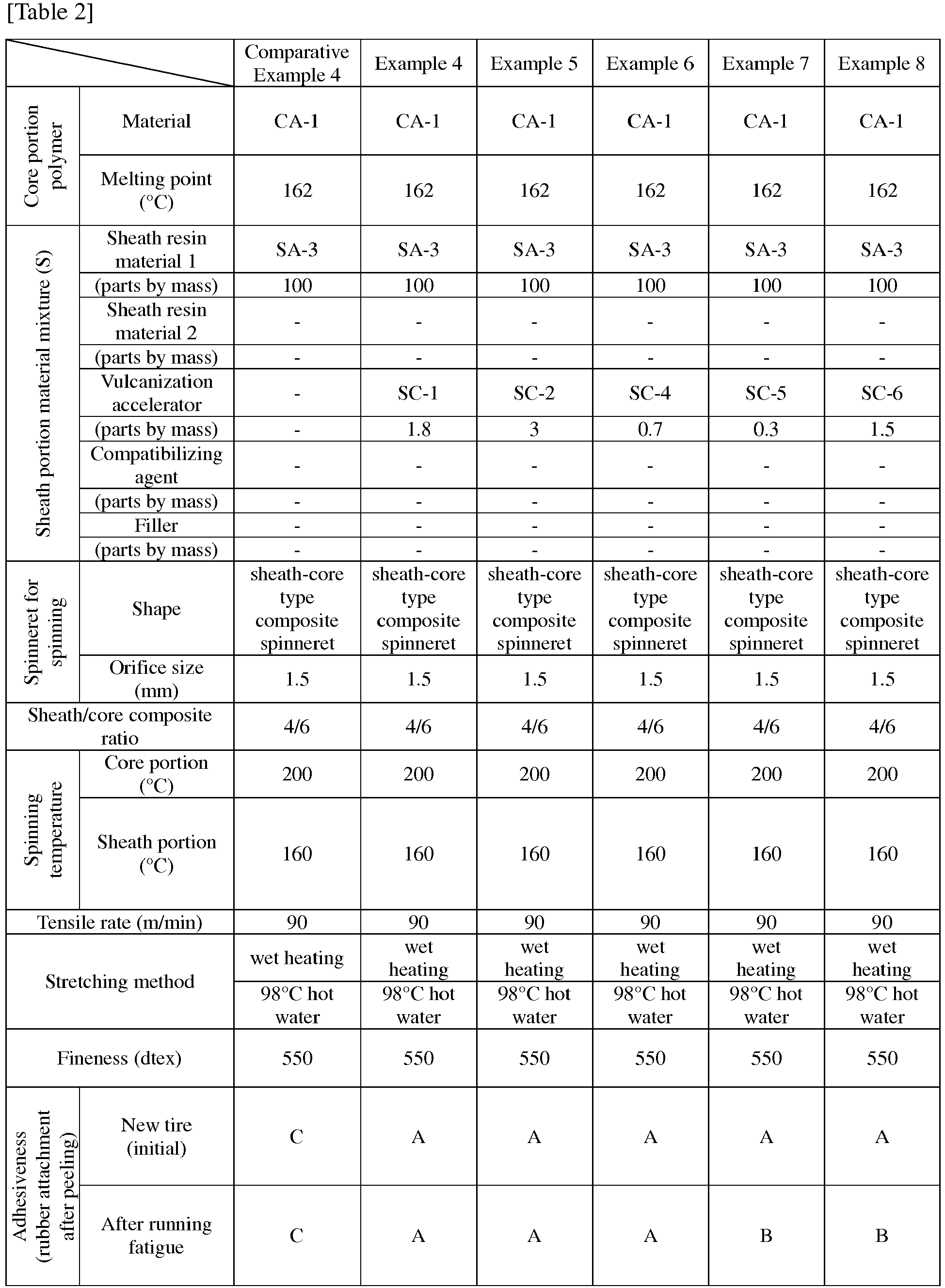

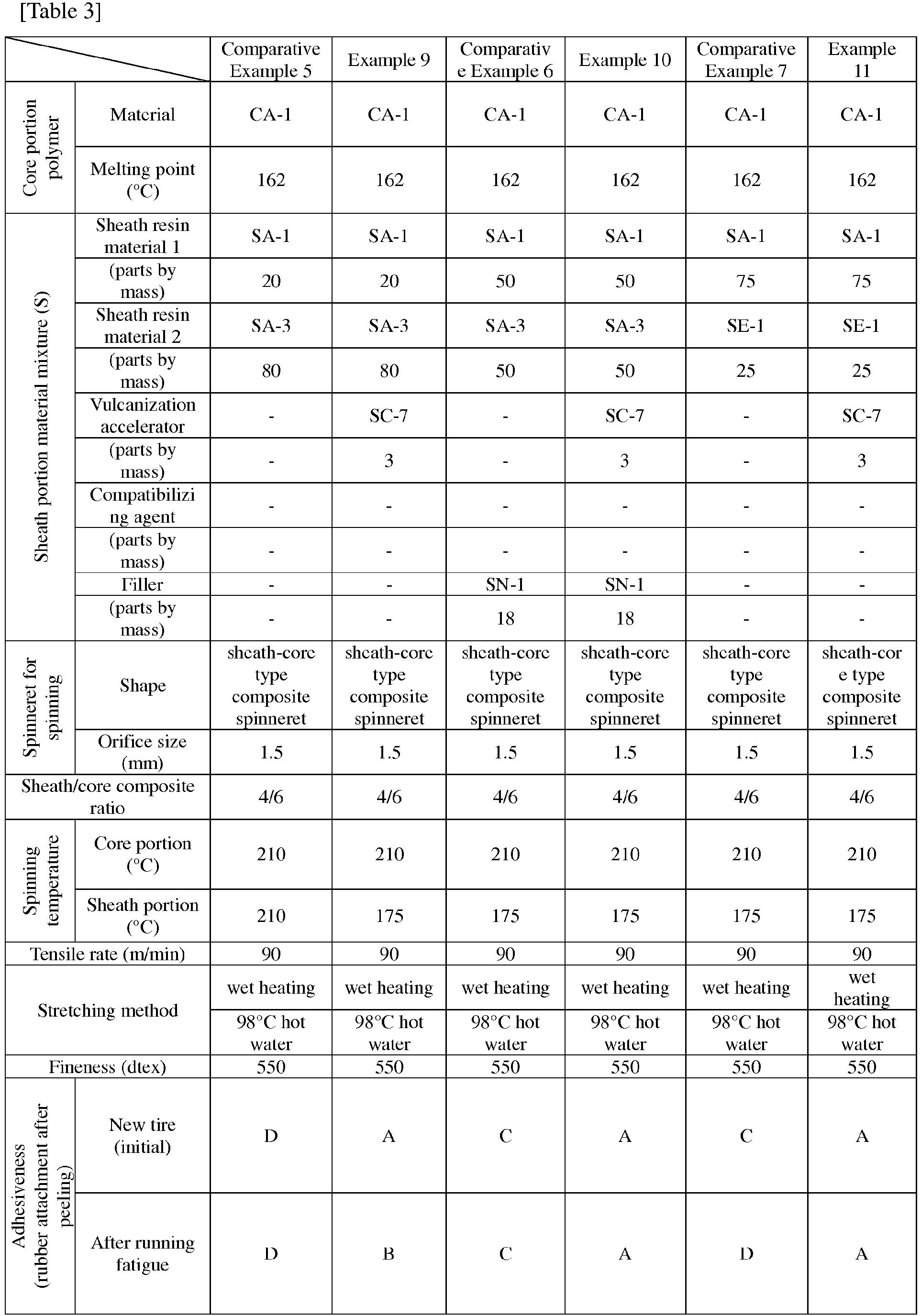

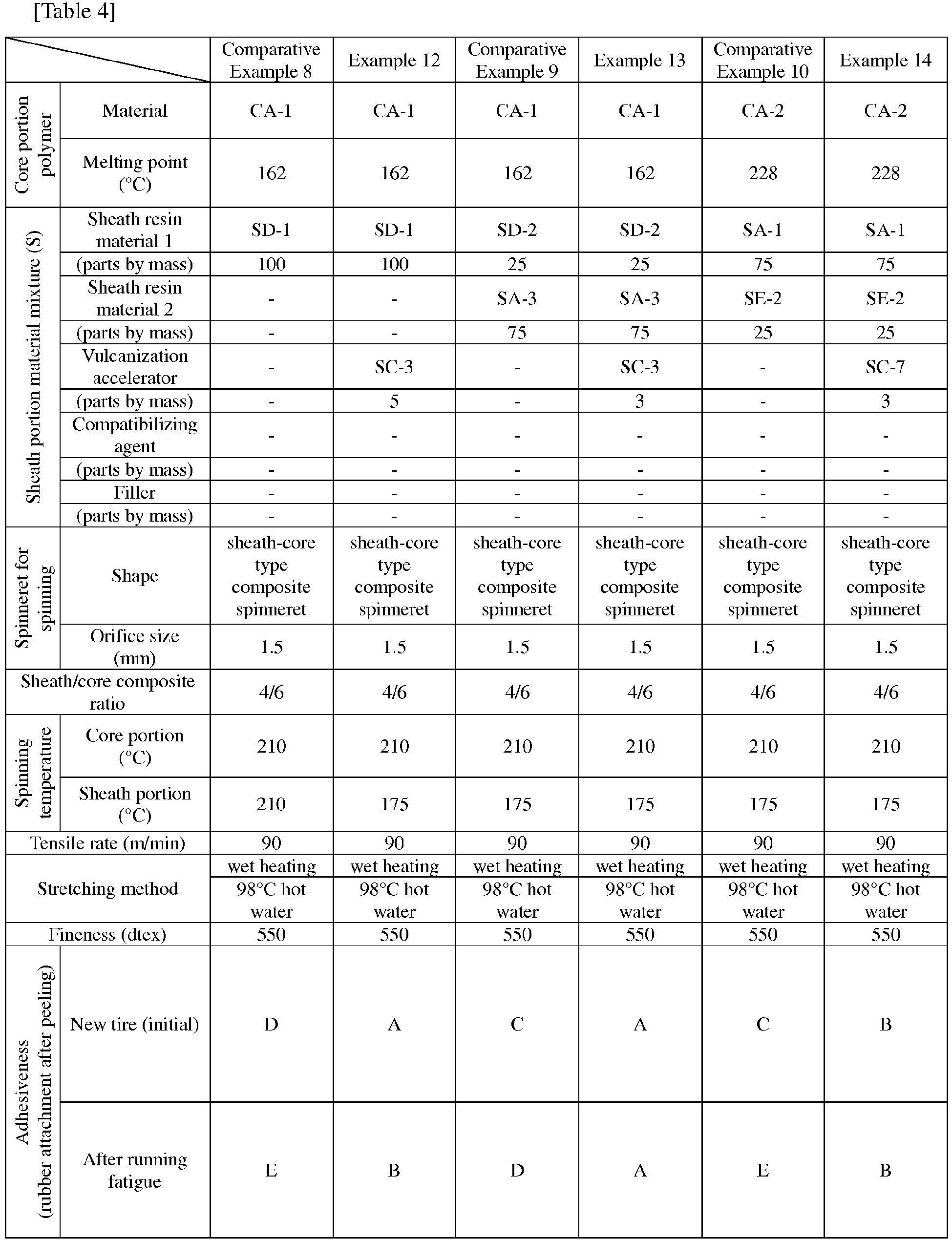

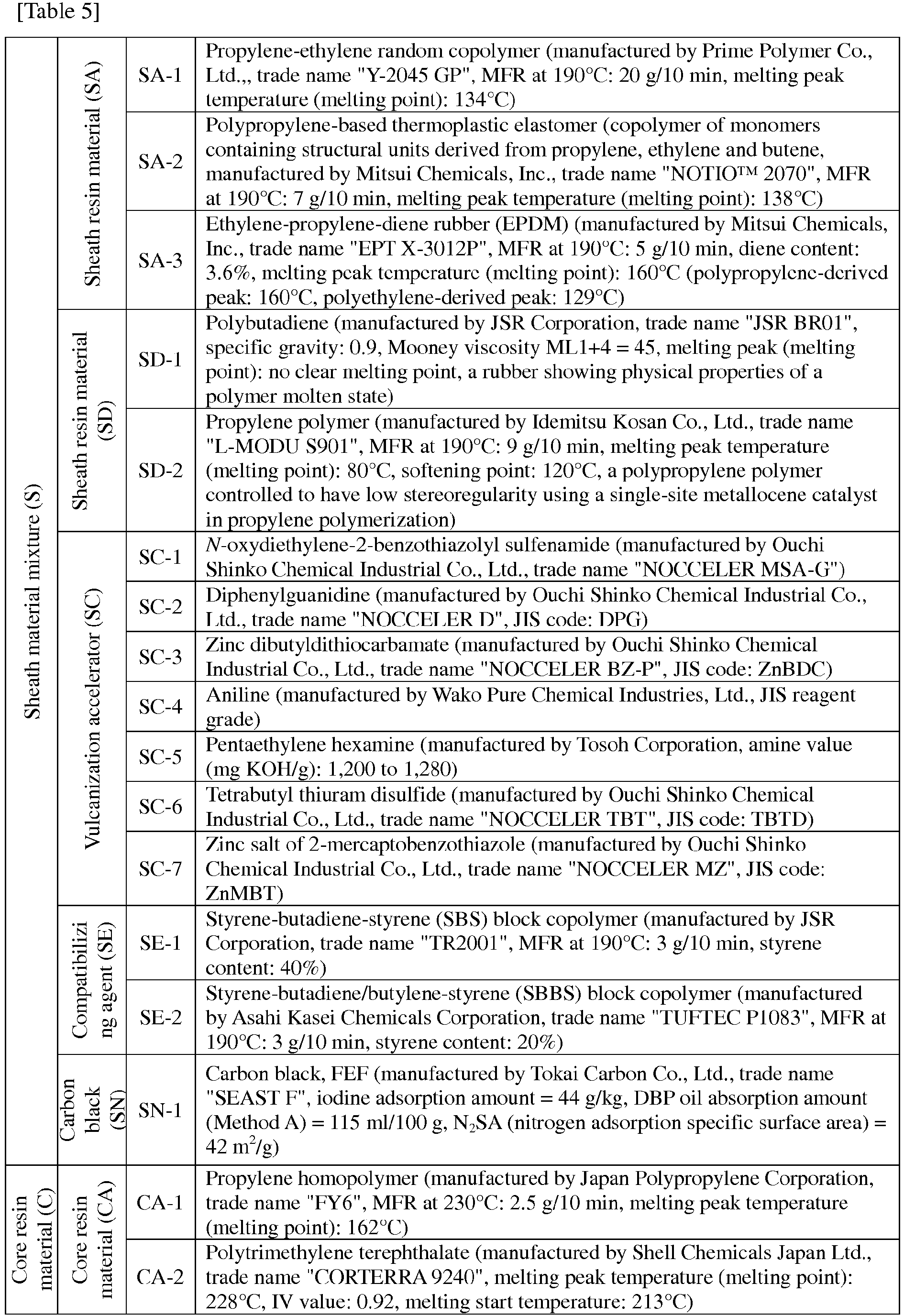

**[Table 6]**

| Ranks of rubber adhesion rate (rubber attachment) | Area ratio of coating rubber with respect to filament surface area |
|---|---|
| A | higher than 80% but 100% or lower |
| B | higher than 60% but 80% or lower |
| C | higher than 40% but 60% or lower |
| D | higher than 20% but 40% or lower |
| E | 0% to 20% |

**[Table 7]**

| Formulation of rubber composition for side wall (S-1) | (parts by mass) |
|---|---|
| NR¹⁾ | 50 |
| BR²⁾ | 50 |
| Carbon black³⁾ | 35 |
| Stearic acid⁴⁾ | 2 |
| Zinc white⁵⁾ | 2 |
| Age resistor⁶⁾ | 2 |
| Vulcanization accelerator⁷⁾ | 1.5 |
| Sulfur⁸⁾ | 1.5 |

| | |
|---|---|
| ¹⁾ NR: natural rubber (TSR20) (*TSR = Technically Specified Rubber) ²⁾ BR: butyl rubber (manufactured by Exxon Mobil Corporation, trade name: BROMOBUTYL 2255) ³⁾ SEAST 300, manufactured by Tokai Carbon Co., Ltd. ⁴⁾ vulcanization aid (50S, manufactured by New Japan Chemical Co., Ltd.) ⁵⁾ vulcanization accelerating aid (zinc white, manufactured by Hakusuitech Co., Ltd.) ⁶⁾ age resistor: *N*-(1,3-dimethylbutyl)-*N'-p*-phenylenediamine, NOCRAC 6C manufactured by Ouchi Shinko Chemical Industrial Co., Ltd. ⁷⁾ vulcanization accelerator: cyclohexylbenzothiazyl sulfenamide, CZ manufactured by Ouchi Shinko Chemical Industrial Co., Ltd. ⁸⁾ HK-200-5 (5%-by-mass oil-containing powder sulfur), manufactured by Hosoi Chemical Industry Co., Ltd. | |

As shown in Tables 1 to 4 above, a rubber attachment rank of B or higher was attained in all of Examples, and the state of adhesion with rubber was thus confirmed to be more favorable than the rubber attachment rank E that was given to the polypropylene homopolymer monofilament having a melting point of 162°C that was used as a core component.

### DESCRIPTION OF REFERENCE NUMERAL

1: bead core
1a: tire radial-direction outer end of bead core 1
2: carcass layer
2A: main body of carcass ply
2B: tire width-direction end of carcass ply
3: belt layer
4: reinforcing layer
5: bead filler
11: bead portion
12: side wall portion
13: tread portion

## Claims

1. A rubber-reinforcing fiber comprising a core-sheath type composite fiber whose core portion is composed of a high-melting-point resin (A) having a melting point of 150°C or higher and sheath portion is composed of a resin material (B) having a melting point lower than that of said high-melting point resin (A),
wherein said resin material (B) comprises an olefin-based polymer (X) and a vulcanization accelerator (F).

2. The rubber-reinforcing fiber according to claim 1, wherein said resin material (B) further comprises at least one selected from the group consisting of a compatibilizing agent (E) and a filler (N).

3. The rubber-reinforcing fiber according to claim 1, wherein said olefin-based polymer (X) is an olefin-based polymer (Y) which contains a Lewis base functional group-containing addition-polymerizable monomer in an amount of 5% by mole or less.

4. The rubber-reinforcing fiber according to claim 3, wherein said Lewis base functional group of said olefin-based polymer (Y) is a pyridyl group, an N-substituted imidazolyl group, an *N*-substituted indazolyl group, a nitrile group, an azide group, an *N*-substituted imino group, an *N,N*-substituted amino group, an *N,N*-substituted aminooxy group, an *N,N,N*-substituted hydrazino group, a nitroso group, a nitro group, a nitrooxy group, a furyl group, a carbonyl group, a thiocarbonyl group, an alkoxy group, an alkyloxycarbonyl group, an *N,N*-substituted carbamoyl group, a thioalkoxy group, a substituted sulfinyl group, a substituted sulfonyl group, or a substituted sulfonic acid group.

5. The rubber-reinforcing fiber according to claim 1, wherein said olefin-based polymer (X) is composed of an olefin-based random copolymer (C) and/or an olefin-based homopolymer or olefin-based copolymer (D) (excluding (C)).

6. The rubber-reinforcing fiber according to claim 1, wherein said olefin-based polymer (X) comprises a conjugated diene-containing olefin-based random copolymer (C2).

7. The rubber-reinforcing fiber according to claim 1, wherein said vulcanization accelerator (F) is a Lewis base compound (F1), or a compound (F2) capable of generating a thiyl radical.

8. The rubber-reinforcing fiber according to claim 7, wherein said compound (F2) capable of generating a thiyl radical is a thiourea-based, thiazole-based, sulfenamide-based, thiuram-based, dithiocarbamate-based or xanthate-based vulcanization accelerator.

9. The rubber-reinforcing fiber according to claim 2, wherein said compatibilizing agent (E) is a styrene-based elastomer containing a monomolecular chain in which mainly styrene monomers are arranged in series.

10. The rubber-reinforcing fiber according to claim 2, wherein said filler (N) is a carbon black.

11. The rubber-reinforcing fiber according to claim 1, wherein said resin material (B) comprises said vulcanization accelerator (F) in an amount of 0.05 to 20 parts by mass with respect to 100 parts by mass of said olefin-based polymer (X).

12. The rubber-reinforcing fiber according to claim 2, wherein said resin material (B) comprises said compatibilizing agent (E) and/or said filler (N) in an amount of 0.1 to 30 parts by mass with respect to 100 parts by mass of said olefin-based polymer (X).

13. The rubber-reinforcing fiber according to claim 6, wherein said conjugated diene-containing olefin-based random copolymer (C2) is contained in an amount of 5 to 95 parts by mass in 100 parts by mass of said olefin-based polymer (X).

14. A rubber-fiber composite obtained by coating a reinforcing material composed of the rubber-reinforcing fiber according to claim 1 with a rubber.

15. A pneumatic tire comprising a reinforcing layer composed of the rubber-fiber composite according to claim 14.
